# EUROPEAN PATENT SPECIFICATION

(11) **EP 4 181 099 B1**
(45) Date of publication and mention of the grant of the patent: **12.11.2025**
(21) Application number: 22215505.3
(22) Date of filing: 12.06.2020
(51) Int. Cl.: G08G 1/00, G07C 5/02, G06Q 10/04

(54) **METHODS AND SYSTEMS OF ASSIGNING TRIPS TO VEHICLES**
VERFAHREN UND SYSTEME ZUR ZUORDNUNG VON REISEN ZU FAHRZEUGEN
PROCÉDÉS ET SYSTÈMES D'ATTRIBUTION DE VOYAGES À DES VÉHICULES

(30) Priority: 13.06.2019 GB 201908502
(43) Date of publication of application: 17.05.2023
(62) Divisional of application: 20179819.6
(73) Proprietor: Bridgestone Mobility Solutions B.V., 1083 HK Amsterdam (NL)
(72) Inventor: VERHEIJEN, Paul Roeland, 2105 TV Heemstede (NL); FELLOWS, Robin, 1213 XV Hilversum (NL); SACHSE, Patric, 12559 Berlin (DE); WINKLER, Tom, 15806 Zossen (DE)
(74) Representative: Dehns

(56) References cited:
- WO-A1-2018/140951
- CN-A- 108 932 832
- JP-A- 2005 056 194
- JP-A- H08 166 939
- US-A1- 2017 262 790
- US-A1- 2018 081 374
- US-A1- 2018 211 218
- US-A1- 2019 311 307
- US-B1- 6 625 539

## Description

### Field of the Invention

This invention relates to methods and systems of assigning trips to vehicles within a fleet of vehicles that traverse a navigable network in a geographic area, and, in particular, to methods and systems for generating information for a dispatcher to facilitate the assignment of a trip to a vehicle. The trip may, for example, be a trip to a new job, or to a rest stop. Thus, the invention is particularly, although not exclusively, concerned with methods and systems of assigning new jobs or rest stops to vehicles within a fleet of vehicles. The invention is, at least in embodiments, concerned with methods and systems which enable remaining driving time to be more readily taken into account by a dispatcher when assigning trips to vehicles.

### Background to the Invention

Fleet management systems (FMS) are known, which may enable a dispatcher to perform various tasks. For example, fleet management systems may be used to assign jobs to different drivers, and to plan routes and estimated arrival times. Other tasks which may be supported by a FMS include monitoring and attempting to improve vehicle performance, fuel efficiency or driver safety, supporting risk management, and generally seeking to improve fleet efficiency. Typical fleet management systems involve a combination of software, such as a "Software-as-a-Service" (SaaS) application, and vehicle-based technology.

In general, fleet management systems may at least assist a dispatcher in managing routes and destinations of vehicles, and to better manage the use of the vehicles. Some systems may support management of the vehicle drivers and their destinations. For example, itineraries may be planned for individual drivers, incorporating all the destinations required by the driver to fulfil a set of jobs in a given period. This may be useful in the context of fleets in which the vehicles perform tasks such as picking up or delivering goods at a number of destinations, or perform a service operation at multiple locations.

One key consideration which must be taken into account by a dispatcher is the remaining driving time for each vehicle. This is the remaining permitted time that a vehicle may legally be operated by a driver or drivers of the vehicle in a given period e.g. day, week or two weekly period, as defined by applicable regulations. Where a vehicle is operated by a single driver, the remaining driving time for the vehicle and the driver will be the same. Where a vehicle is operated by multiple drivers, the remaining driving time for the vehicle is based on the remaining driving times of each of the drivers.

The remaining permitted time for a vehicle may be governed by a number of different regulations, including working time and driver's hours regulations. Local, national and, in some cases, international regulations may be applicable. For example, drivers of large commercial vehicles are restricted by legislation in the EU regarding how drivers may conduct driving duties in different periods e.g. day, week, two weekly etc. These restrictions are detailed in European Commission mandates (e.g. 2006/561/EC, and 2003/88/EC) and there is a requirement for dedicated equipment (Tachograph) to be fitted to all qualifying vehicles to accurately record the activity of the driver. Similar regulations exist in other countries (US, AU). For example, in the US, vehicles are equipped with an electronic logging device (ELD) to ensure compliance with the hours of service (HOS) rules. Compliance with such regulations is paramount, and penalties for contravening regulations high.

When a dispatcher needs to assign a new job, remaining driving time for the drivers associated with vehicles must be considered along with other factors, such as proximity of vehicles to a location of the job, which may be more generally required to be considered when planning a route. Remaining driving time will limit the area which may be reached by a vehicle from a current or future location e.g. a location of a preceding job, and hence has an impact on the allocation of jobs. Remaining driving time therefore adds another level of complexity to vehicle job assignment and route planning tasks. Planning responses to unplanned events may be particularly complex, especially where more than one vehicle is to be considered.

Consideration of remaining driving time is usually conducted by a human dispatcher, making decisions based upon information obtained from multiple different planning tools. The dispatcher may construct a plan e.g. itinerary for each for vehicle taking into account remaining driving time for the vehicle and then provide this to the FMS. However, such methods are labour intensive, and require the dispatcher to collate information from multiple sources. It may be difficult to respond to unplanned events which may occur, and which might prompt a change in the vehicle route plans. Such changes might include additional work, driver sickness, customer cancellations or vehicle breakdowns, which might necessitate a reallocation of assignments, or accidents, roadworks, congestion or road closures which might have an impact on journey times, and likewise may necessitate a reallocation of jobs in order to ensure that all required assignments are performed. The dispatcher will be required to update vehicle route plans in order to take account of such unplanned events, and redistribute jobs among the vehicles and drivers.

The Applicant has realised that there is scope to improve existing fleet management systems (FMS), particularly in relation to taking into account remaining driving time, which may limit the distance which may be travelled to a destination. For example, existing FMS fail to take adequate account of remaining driving time, which may result in sub-optimal planning e.g. assignment of jobs, or provision of accurate estimations of arrival time at a job, and, in some cases, could lead to contravention of permitted driving time regulations. The Applicant has also realised that existing fleet management systems may not adequately support a dispatcher in relation to the assignment of rest stops to drivers of vehicles of a fleet, which again, may risk contravention of permitted driving time regulations.

US 2018/081374 discloses a transportation management system that includes tools for generating an optimized trip plan that can be updated, such as based on driver input, during implementation of a planned trip. The system includes tools calculating estimated time of arrival (ETA) and projected time of availability (PTA) for the driver, and these tools are adapted to provide the ETA and PTA for the entire trip (rather than only providing an ETA for the next stop).

### Summary of the invention

In accordance with a first aspect of the invention there is provided a method as defined by claim 1.

Thus, a location of interest and boundary is displayed to the dispatcher in respect of each of the one or more vehicles, which may be used by the dispatcher in assigning a trip to a vehicle from the one or more vehicles. The boundary is indicative of an area which may be reached by the vehicle in accordance with a time budget for the vehicle, which time budget is representative of an amount of time that the vehicle may be legally operated by a driver or drivers associated with the vehicle within a given time period starting from a time of interest. The time budget is thus based on a "remaining driving time" for the vehicle, and is determined using log data for the vehicle. In this way, the present invention provides a method which enables remaining driving time for vehicles in a fleet of vehicles to be easily taken into account by a dispatcher when assigning trips to the vehicles, utilising the log data (and location data) which may be obtained from electronic devices associated with the vehicles. This avoids the need for the dispatcher to have to attempt to collate data from various sources to try to take account of remaining driving time, and provides an accurate indication of the effect of remaining driving time upon operations, based upon vehicle log data.

The steps of the method involved in generating the information for a dispatcher to facilitate assignment of a new trip to a vehicle i.e. the steps involved up to and including the step of providing the at least boundary and location of interest data to a display device of the dispatcher, and any further steps involved in the implementation of these steps, are performed in respect of each one of one or more vehicles of a fleet of vehicles. The one or more vehicles of the fleet of vehicles may be a subset of the fleet of vehicles, which may be selected in any suitable manner e.g. depending upon the application of the method. Some examples are described below.

References to "the" vehicle should, unless the context demands otherwise, be understood to be applicable to each one of the one or more vehicles considered. Any of the features described herein in relation to performing the method in respect of a vehicle may be used in performing the method in relation to any further vehicle considered.

Data is then received from the dispatcher assigning a trip to one of the one or more vehicles from the fleet. Of course, a dispatcher may assign a plurality of trips to respective ones of the one or more vehicles from the fleet. The dispatcher assigns the new trip to the vehicle using the displayed data indicative of the location of interest and boundary for the vehicle.

The data assigning the trip to a vehicle received from the dispatcher may be received in any suitable manner, and may be provided by the dispatcher making any suitable input or inputs e.g. via a device of the dispatcher. The dispatcher may provide any indication(s) which associate a trip with a particular vehicle. The data may comprise a selection of the trip and/or vehicle to which it is to be assigned by the dispatcher. An indication of a selection of a trip may be provided by indicating a selection of a location associated with the trip.

Each vehicle is associated with i.e. can be driven by, one or more drivers. A vehicle may be a single driver vehicle or a multiple driver vehicle.

The methods of the present invention may be used in assigning any type of trip to a vehicle from a fleet of vehicles.

In some embodiments the trip is a trip to (a location of) a new job. The location associated with the trip to the new job (comprised by the data assigning the trip to the new job to a vehicle) will then be a location of the new job.

The method may comprise identifying a subset of the fleet of vehicles in relation to which to perform the method of generating information for a dispatcher to facilitate the assignment of a new job (or trip to a new job) to the vehicle. This step may be performed when a new job to be assigned to a vehicle is received (by the system). The subset of the fleet of vehicles comprises one or more vehicles from the fleet of vehicles. The subset of the fleet of vehicles is the one or more vehicles of the fleet of vehicles in relation to which the method of generating information for the dispatcher is performed. The subset of vehicles may be a subset of the vehicles available to perform the job and/or that are within a certain proximity to the location of the new job. The proximity may be a spatial and/or temporal proximity i.e. a certain time and/or distance of the location. The subset of the fleet of vehicles may be identified using data indicative of a desired start time of the new job.

It will be appreciated that suitable information should be available to the system to enable such a subset of the fleet of vehicles to be identified. The location data for the vehicles may be used to determine a temporal or spatial proximity of the vehicles to the location of the new job. Temporal proximity may be determined using suitable routing calculations to identify those vehicles which can arrive at the location by a given time, such as a desired start time for the job, or within a certain time period thereafter. The routing calculations may take into account current conditions e.g. traffic conditions on the navigable network.

The method may further comprise obtaining data indicative of jobs (already) assigned to the vehicles ("existing" job(s)). Such data may be used in identifying the subset of the fleet of vehicles, and/or in other operations associated with the methods described herein. The method may comprise obtaining and using such data in any of the methods described herein, whether or not concerned with the assignment of a new job to a vehicle. For example, the data may be used in determining a location or time of interest for a given vehicle. For each vehicle, the system will then be able to determine, for a given vehicle, whether any job has already been assigned thereto. The data indicative of the jobs assigned to the vehicles may comprise, for each vehicle having a job assigned thereto, data indicative of the or each job assigned to the vehicle, the data indicative of a job comprising at least a location of the job. Where multiple jobs are assigned to a vehicle, the data may comprise an ordered list of jobs. The data indicative of a job may further comprise data indicative of a job duration i.e. a predicted job duration.

Alternatively or additionally, the method may comprise receiving an indication of one or more vehicles e.g. the subset of vehicles in relation to which the method of generating information for the dispatcher is to be performed from the dispatcher.

In other embodiments the trip is a trip to (a location of) a rest stop. The data assigning the trip will then comprise at least a location of the rest stop. The invention, in these embodiments, is particularly applicable to a vehicle operated by a single driver. However, it may also be applicable to multi-driver arrangements.

In these embodiments of the invention, the information for a dispatcher to facilitate the assignment of a rest stop to a vehicle may be generated in respect of an individual vehicle, or a subset of the fleet of vehicles in a given proximity to a particular location. Thus, the one or more vehicles of the fleet of vehicles may be a single vehicle, or a plurality of the vehicles corresponding to a subset of the vehicles in a given proximity to a particular location. The proximity may be a temporal and/or spatial proximity to the location, and is preferably a spatial proximity. Alternatively or additionally the method may comprise receiving an indication of the one or more vehicles from the dispatcher.

In these embodiments of the invention, the data assigning a rest stop to the vehicle may comprise a selection of a rest stop from a plurality of possible rest stops. The method may comprise displaying data indicative of possible rest stops to the dispatcher (e.g. on a representation of at least a portion of the navigable network upon which the boundary and location data is displayed) to enable the dispatcher to select a rest stop from the possible rest stops.

The method in accordance with any of its embodiments may comprise generating a set of navigation instructions for directing a driver of the vehicle to the location associated with a trip (e.g. the location of a new job or rest stop), and providing the navigation data to a device associated with the vehicle e.g. for provision to the driver.

In accordance with the invention in any of its embodiments, the location of interest in respect of a vehicle used in determining the boundary data for the or each vehicle in respect of which the method is performed may be a current location or a future location. The nature of the location may depend upon the application of the method.

The method may comprise obtaining the location of interest in any suitable manner e.g. based upon location data for the vehicle. Where the location of interest is a current location, the location of interest may simply correspond to a current location of the vehicle obtained from an electronic device associated with the vehicle. Where the location of interest is a future location of the vehicle, the location may be obtained using data indicative of one or more assigned jobs for the vehicle. For example, as described below, in some exemplary embodiments, the location may be a location of a (final) existing planned job to be performed by the vehicle. The system may thus have access to data indicative of one or more assigned jobs for vehicles in the fleet of vehicles. Whether a current location or future location is used as the location of interest may depend upon the location(s) of any jobs assigned to the vehicle.

The method may further comprise obtaining data indicative of jobs (already) assigned to the vehicles. The data indicative of the jobs assigned to the vehicles may comprise, for each vehicle having a job assigned thereto, data indicative of the or each job assigned to the vehicle, the data indicative of a job comprising at least a location of the job. Where multiple jobs are assigned to a vehicle, the data may comprise an ordered list of jobs. The data indicative of a job may further comprise data indicative of a job duration i.e. a predicted job duration. The assigned job data may be received e.g. as a live feed.

Assigned job data may be used to determine whether the current location or a future location should be used as the location of interest for a vehicle. The method may further comprise using the obtained data indicative of jobs (already) assigned to the vehicles to determine whether the vehicle (of the one or more vehicles of the fleet being considered) already has one or more jobs assigned thereto, and, where the vehicle does not have a job assigned thereto, using the current location of the vehicle as the location of interest in respect of the vehicle, and, when the vehicle has one or more jobs assigned thereto, using the assigned job data for the vehicle to determine the location of interest. Where a vehicle has one or more jobs assigned thereto, the method may comprise using the location of a final assigned job as the location of interest for the vehicle. This may correspond to the current location of the vehicle where the vehicle has only one job assigned thereto and is performing the job, or may correspond to a future location where the vehicle has yet to reach the location of the final job e.g. if it is travelling to the location or is still at the location of a previous job, or travelling thereto.

The boundary data determined in accordance with the invention in any of its embodiments is indicative of a boundary enclosing a portion of the geographic area representing the area which is reachable by the vehicle by traversing the navigable network from the location of interest in respect of the vehicle, whether a current or future location of interest, within the determined time budget for the vehicle (which may be referred to, for brevity, as the "reachable area" herein). The boundary may correspond to the perimeter of the portion of the geographic area. The reachable area is an area which is reachable by the vehicle without contravening the time budget. Thus the time budget provides a time constraint for use in determining the boundary and/or the energy budget provides an energy constraint for use in determining the boundary. Other constraints may additionally be taken into account. The perimeter of the reachable area (i.e. the boundary) is indicative of a limit of the reachable area. The reachable area is a continuous area. A reachable area as referred to herein is an area within which all locations may be reached by the vehicle from the location of interest in respect of the vehicle without contravening the time budget (or any other applicable constraints).

It will be appreciated that the area reachable within the time budget represented by the portion of the geographic area enclosed by the boundary may correspond to the area reachable when using the entire time budget, or a proportion thereof. Thus the area may correspond to a maximum reachable area, or a proportion of a maximum reachable area. For example, to build in some scope for error, a value such as 95% of the time budget may be used when determining the boundary data to try to ensure that the resulting area defined by the boundary is indeed reachable without contravening the time budget.

The boundary may be of any suitable form. In some embodiments the boundary is in the form of a polygon. Thus, in these embodiments, the boundary is not merely a circle with a particular radius based on the location of interest in respect of the vehicle, but more realistically reflects the actual situation, as the distance which may be travelled by a vehicle in any direction while satisfying the time budget and any other constraints imposed will be limited by the road network. For example, a vehicle may be able to travel further in one direction, where road segments are associated with higher speed limits than in another direction, where the road network is made up of segments corresponding to more minor navigable elements of the road network. The polygon whose perimeter defines the boundary representing the reachable area may be determined using an electronic map data in the manner described herein. In some embodiments the boundary is defined by a set of point locations. Each may correspond to a location as represented by the electronic map. The location may be a location along a segment of the electronic map or may be a node thereof.

Preferably the step of determining the boundary data comprises exploring segments of an electronic map representative of navigable elements of the navigable network from a position on a segment representative of the location of interest in respect of the vehicle using a search algorithm having an associated cost function. The cost function used may be obtained in any suitable manner. For example, the method may extend to determining the cost function, or the cost function may be selected e.g. from among a plurality of possible cost functions. The cost function may be obtained based upon provided information e.g. indicative of the type of route required, such as "fastest" or "eco" (i.e. most fuel/energy efficient). The cost function may take into account a number of criteria. Various techniques which may be used in determining a reachability area for a vehicle based upon one or more constraints are described in WO 2014/001565A1, in the name of TomTom Development Germany GMBH, the entire content of which is incorporated herein by reference.

The step of determining the boundary data (e.g. of exploring the segments of the electronic map) may take into account historical data relating to the traversal of segments of the network, real-time information indicative of conditions on the navigable network and/or historical driving behaviour of the vehicle driver or drivers. The effect of any one or ones of these factors may be taken account of by means of adjusting cost values associated with segments.

When determining the boundary data, an applicable cost value is used for each segment considered in the route search. The applicable cost value may be a cost value applicable time e.g. a current or future time. It will be appreciated that a cost value for a segment in respect of a constraint may be time dependent. For example, a cost indicative of a time or amount of energy required to traverse a segment may depend upon the time of day, since traffic conditions will typically vary throughout the day. A cost value for a segment may be based at least in part on historical data. For example, the cost value may be based upon historical data relating to an applicable time period. A cost value in respect of remaining driving time may be, or be based on a traversal time for the segment based upon historical traversal times for the applicable time period. Alternatively or additionally, a cost value for a segment may be based at least in part on live data. For example, the cost value may be based upon live data. For example, the cost of traversing a segment may take into account live traffic conditions, roadworks etc. Alternatively or additionally, a cost value for a segment may be based at least in part on the driving behaviour of the or each vehicle driver e.g. a driving efficiency.

Of course, combinations of historical and live data may be used. For example, live data may be used to modify applicable historical data where the current conditions differ significantly from those expected.

Live data as used herein in accordance with any of the embodiments of the invention refers to data which is relatively current and provides an indication of the relatively conditions in the network. The live data may typically relate to the conditions within the last 30 minutes, 15 minutes, 10 minutes or 5 minutes. "Historical" data, in contrast, refers to data that is not live, that is data that is not directly reflective of conditions in the network at the present time or in the recent past (perhaps within roughly the last five, ten, fifteen or thirty minutes).

The energy budget may be determined based on a current energy e.g. charge and/or fuel level of the vehicle. The obtained energy data for the vehicle may be obtained from any suitable source. The one or more electronic devices of the vehicles in the fleet may further comprise one or more electronic devices arranged to provide data indicative of an energy level e.g. fuel and/or charge level of the vehicle (depending upon the nature of the vehicle). An energy level of a vehicle may alternatively or additionally be used e.g. in obtaining a cost function where an "eco" route is selected.

The determination of the boundary data may also take into account a vehicle profile. The method may comprise obtaining data indicative of a vehicle profile for the vehicle. The vehicle profile data may then be used in determining the boundary data. The vehicle profile may, for example, be indicative of at least one property of the vehicle. The one or more property may comprise one or more of: a vehicle type, at least one dimension of the vehicle (e.g. length, width, height), at least one weight of the vehicle (e.g. axle weight, overall weight), emissions information for the vehicle, and information identifying any hazardous materials carried by the vehicle. The vehicle profile may be used to identify one or more segments of the electronic map representative of navigable elements that should not and/or could not be traversed by the vehicle. For example, if the vehicle is above a given height, it may be unable to traverse certain elements which pass under low bridges. Other elements may be prohibited from being traversed by certain types of vehicle for legal reasons. For example, vehicles carrying certain hazardous loads may be prohibited from traversing elements close to civilian population centres. Alternatively or additionally a vehicle profile may be used in obtaining a cost function for use in determining the boundary data. For example, segments corresponding to elements which should not or cannot be traversed by a vehicle may be penalised in a cost function such that they are unlikely to be selected for inclusion in a least cost route. Vehicle profiles and their use by a routing engine are described in WO 2017/032816A1 of TomTom Navigation B.V and TomTom Telematics B.V, the entire content of which is incorporated herein by reference.

The step of determining the boundary data preferably takes into account live conditions on the navigable network. This may be achieved using real-time information indicative of conditions on the navigable network. For example, such information may be provided using a live feed. The live conditions may include live traffic conditions, and/or road conditions (e.g. road status, such as closures or roadworks, accidents, weather conditions etc.) The method may therefore take into account live data relating to the traversal of segments of the navigable network.

Alternatively or additionally, the step of determining the boundary data may take into account historical data relating to the traversal of segments of the navigable network e.g. historical traversal times for segments.

Alternatively or additionally, the step of determining the boundary data may take into account the driving behaviour of the one or more vehicle driver associated with the vehicle e.g. a driving efficiency. For example, a driver may have a particularly economical driving profile, which may mean that a vehicle may be able to travel further given the same time budget than another driver.

Taking into account any of these factors may be achieved using appropriate sources of the data. For example, a live feed of data may be provided, indicative of conditions on the network e.g. traffic conditions. Alternatively or additionally, live or historical data e.g. traversal time data may be associated with segments of the electronic map. Driver behaviour data may be obtained using data obtained from one or more electronic devices associated with the vehicle.

The time budget determined in accordance with the invention represents the amount of time that the vehicle can be legally operated by one or more drivers associated with the vehicle within a given time period starting from a time of interest i.e. a "remaining driving time" for the vehicle starting from a time of interest. The time of interest is a time of interest in respect of the vehicle. The time budget for a vehicle as used herein therefore refers to a remaining permissible time that a vehicle may be driven by one or more drivers associated therewith in a given time period starting from a time of interest without contravening applicable regulations. This will be a function of applicable regulations and any other rules affecting driving times e.g. based on an employment contract, a driver's particular circumstances e.g. health etc. For example, in Europe, driving times are regulated by EC 561/2006, while vehicles in the US are governed by the hours of service (HOS) rules.

In embodiments at least, the given time period may be selected as desired, e.g. depending upon the intended application of the method. This may be particularly applicable where the method is used to assign a new job or a trip to a new job to a vehicle. For example, the given time period may be within a given day e.g. a current day. Thus, the time budget may be a daily time budget. Other time periods may also be considered e.g. within a given week. Thus, the time budget may be a weekly time budget. Of course, any length of time period which is of interest for a particular context may be considered, e.g. 2hrs, 24 hrs, 48 hrs, 21 hrs etc. The most relevant period may depend, for example, upon the number of drivers associated with a vehicle. The period may be customised by a dispatcher. The method may comprise receiving an indication of the given period to be considered from the dispatcher. In other embodiments, the period may be predefined, e.g. in settings for a particular context.

Alternatively, in those embodiments relating to assigning a rest stop to a vehicle, the given time period may be a time period until the next regulated rest stop. The given time period to which the time budget relates may, in those embodiments concerned with assigning a rest stop to a vehicle, correspond to a time period starting from a time of interest until a rest stop is required for the vehicle. Broadly, in these embodiments, the time budget represents the amount of time that the vehicle can be legally operated by the one or more drivers associated with the vehicle starting from a time of interest before a rest stop is required. Where the vehicle is operated by a single driver, the time budget will be in relation to the remaining time from the start time of interest until the driver requires a rest stop. Where the vehicle is operated by multiple drivers, the time budget will be in relation to the remaining time from a start time of interest until all drivers require a rest stop.

In accordance with the invention, the time budget may thus be a remaining continuous driving time (of one or more drivers of a vehicle) e.g. until the next break, or may be a total remaining driving time (of one or more drivers of a vehicle) within a given period, e.g. 24 hours, or 1 week, which may be a discontinuous driving period interspersed by one or more regulated breaks.

The time budget represents an amount of time that the vehicle may be operated legally by the one or more drivers associated with the vehicle from the start time of interest. Where there is a single driver associated with the vehicle, then the remaining driving time, and hence time budget, for the vehicle will be based on that for the driver. Where multiple drivers are associated with the vehicle, the remaining driving time, and hence time budget, for the vehicle, will be based on the remaining driving times for each of the drivers in the given time period.

The time budget represents the amount of time that a vehicle can be legally operated by the one or more drivers associated therewith within a given time period (or until a rest stop is required) starting from a time of interest (in respect of the vehicle).

The time of interest may be a current time or a future time. As with the location of interest, the time of interest used in the methods described herein may depend upon the context and application of the method.

In embodiments data indicative of jobs assigned to vehicles in the fleet of vehicles is obtained and used in determining the time of interest in respect of a vehicle.

The method may further comprise obtaining data indicative of jobs (already) assigned to the vehicles. The data indicative of the jobs assigned to the vehicles may comprise, for each vehicle having a job assigned thereto, data indicative of the or each job assigned to the vehicle, the data indicative of a job comprising at least a location of the job. Where multiple jobs are assigned to a vehicle, the data may comprise an ordered list of jobs. The data indicative of a job may further comprise data indicative of a job duration i.e. a predicted job duration. Where data indicative of a time at which a (final) job is expected to be completed is determined, this may be done based upon the or each expected job duration and an expected travel time to the or each job (e.g. between jobs and to a final job where multiple jobs are involved).

Assigned job data may be used to determine whether the current time or a future time should be used as the time of interest for a vehicle, and where it is determined that a future time is to be used, to determine that future time. The method may further comprise using the obtained data indicative of jobs (already) assigned to the vehicles to determine whether the vehicle (of the one or more vehicles of the fleet being considered) already has one or more jobs assigned thereto, and, where the vehicle does not have a job assigned thereto, using the current time as the time of interest, and, when the vehicle has one or more jobs assigned thereto, using the assigned job data for the vehicle to determine the time of interest. Where a vehicle has one or more jobs assigned thereto, the method may comprise using the estimated completion time of a final (existing) assigned job as the time of interest for the vehicle.

The time budget is determined using log data for the vehicle indicative of the activities of the one or more drivers associated with the vehicle. The log data is data which may be used to determine a remaining driving time for the vehicle from a current time in a predefined period. For example, the log data may comprise data indicative of changes in a work state of the driver or drivers of the vehicle e.g. between driving, resting, standby or performing other work states. Such data may be used to determine a remaining driving time for the vehicle from a current time in a predefined period, which may be based upon a remaining driving time for the or each driver of the vehicle from a current time in the predefined period. The determination of a remaining driving time of a driver from a current time in a predefined period may be performed using the log data and the applicable rules regulating the driving time of the driver. Such rules may define the working and resting periods for the driver, and will be dependent upon factors such as country of operation, type of vehicle driven, type or work undertaken, specific labour agreements etc. The remaining driving time for a driver from a current time in a predefined period may be performed by a FMS using the log data and the rules applicable to the particular driver. As described in relation to the "given period" for the time budget, the predefined period in respect of remaining driving time may be any specified period, or may, as a default, be a period until the next regulated rest stop. The predefined period may be automatically defined or user defined. Determining a remaining driving time from a current time for a vehicle associated with multiple drivers in a predefined period will be based on log data relating to each of the drivers, and the applicable rules governing multiple driver operation. This may involve determining individual remaining driving times from a current time for each driver in a predefined period.

Where a vehicle has a single driver and the time of interest is the current time, the time budget may simply correspond to the remaining driving time from the current time for the driver associated with the vehicle in a predefined period corresponding to the applicable given period to which the time budget relates e.g. until a rest stop is required, or a predefined time corresponding to the end of the given period is reached. If multiple drivers are used, then the time budget may be based upon the remaining driving time for each driver from a current time limited by the predefined period corresponding to the applicable given period (until a rest stop is required or the end of the period is reached). Where the time of interest is not a current time, some adjustment of the current remaining driving time will be needed for use in determining the time budget, i.e. such that the time budget is based on only the remaining driving time for the (or each) driver starting from the time of interest. For example, the time budget may be based upon the current remaining driving time for the vehicle minus the expected driving time required to reach a final assigned job (which may be a sum of driving times to/between jobs where the final job is one of a number of assigned jobs). Where the time of interest is a time at which a current job is expected to be completed, then the current driving time may correspond to the current remaining driving time.

The method comprises obtaining a location of interest in respect of the vehicle, and obtaining log data for the vehicle indicative of the activities of the one or more drivers associated with the vehicle and which may be used to determine a remaining driving time for the vehicle from a current time in a predefined period. The steps of obtaining the location of interest in respect of the vehicle and obtaining log data for the vehicle may be performed in any order, or simultaneously.

The log data for the vehicle is obtained from one or more electronic devices of the vehicle. The location of interest data for a vehicle may be obtained using location data obtained from the one or more electronic devices of the vehicle. The vehicle includes one or more electronic devices for logging the activities of the one or more drivers associated with the vehicle, and which provide log data which may be used to determine a remaining driving time for the vehicle from a current time in a predefined period. The one or more electronic devices of a vehicle may comprise an electronic logging device (ELD) and/or a tachograph. The one or more electronic devices may provide the log data to a server via a telematics control unit. A telematics control unit (TCU) is a device which which does not provide navigation functionality, but obtains data for storage and/or other purposes, for example for provision to a server. Such devices are often provided for the purpose of monitoring fleets of commercial vehicles such as lorries, buses, taxis, and the like, and/or for providing feedback to a driver. The TomTom^{®} LINK devices are examples of such telematic control units.

The log data for a vehicle that is obtained comprises data which may be used in determining a remaining driving time for the vehicle from a current time in a predefined period for use in determining a time budget representing the amount of time that the vehicle can be legally operated by the one or more drivers associated therewith within a given time period (or until a rest stop is required) starting from a given time of interest. The log data may be indicative of changes in a work state of the or each driver. Preferably the log data is real-time data indicative of the activities of the one or more drivers associated with the vehicle. The log data may comprise tachograph or electronic logging device data. Such data may be obtained from an electronic device or devices associated with the vehicle, whether a dedicated device for this purpose, or a device forming part of another electronic device. The data may be obtained by a server via a telematics control unit, for example.

The method may comprise using the log data to obtain a remaining driving time from the current time for the vehicle in a predefined period corresponding to the given time period to which the time budget relates, and using the obtained remaining driving time in obtaining the time budget. Obtaining the remaining driving time may involve (e.g. the server which performs the other steps of the method) determining the driving time based on the log data, or may involve (e.g. the server) providing the log data to (another) server and requesting that the server provide the remaining driving time for a predefined period corresponding to the given time period based on the log data for use in determining the time budget.

The method may comprise obtaining other data from one or more electronic devices associated with the vehicle for use in the methods described herein. For example, such data may comprise energy e.g. fuel level data at a current time. Such data may be indicative of an actual i.e. measured, or estimated energy e.g. fuel level. This may depend upon the level of integration of a device providing the data with the vehicle. Such data may, for example, be obtained by a server via a telematics control unit of the vehicle.

The current location of the vehicle may be obtained in any suitable manner from the one or more electronic devices associated with the vehicle. The one or more electronic devices may comprise any suitable positioning system for providing such data, e.g. a GPS, GNSS or any other suitable positioning system. For example, the one or more electronics devices may form part of a positioning system of a telematics control unit of the vehicle. The positional data may be time stamped positional data. The data is preferably real time positional data.

Current location and/or log data for a vehicle may be obtained from the one or more electronic devices associated with the vehicle over a wireless communications link. The current location and/or log data may be obtained as a feed, e.g. a live feed. The data may be obtained via a telematics control unit of the vehicle. However, it will be appreciated that this need not be the case. For example, data may be received directly e.g. by a server from the electronic device(s) which provide the data, rather than via a telematics control unit. Any one of the one or more electronics devices may or may not form part of an integrated vehicle system. For example, positional data may be obtained from an integrated positioning system of the vehicle or from a positioning system of a telematics control unit associated with the vehicle. Any suitable arrangement may be used. Moreover, it will be appreciated that the log data and location data may be provided by the same or different one or ones of the one or more electronic devices of the vehicle.

The steps of the method of the present invention in any of its embodiments may be carried out by one or more servers. For example, the steps may be performed as part of a fleet management system operated by a server. The fleet management system may be a software-as-a-service (SaaS) system implemented by the server. Where the method is performed by a server, data indicative of the (current) location and log data for a vehicle may be obtained directly from the one or more electronic devices associated with the vehicle, e.g. through transmission of data from the one or more devices associated with the vehicle to the server, or the data may be transmitted from the one or more devices associated with the vehicle to another device or devices, such as a TCU, and/or a device associated with the dispatcher or another server, and provided to the server performing the method as required. The data may then be subjected to some processing prior to being provided to the server performing the method. It is envisaged, for example, that a server might determine a time budget based on obtained log data from a vehicle, and then pass this to another server for use in the remainder of the method e.g. determining boundary data based on the time budget and the location of interest for a vehicle, and providing the data to a display device of a dispatcher. Determining the time budget based upon the log data may involve the server requesting another server e.g. a server running an FMS application to determine a remaining driving time from a current time for the or each driver associated with the vehicle, or for the vehicle, for a predefined period corresponding to the given time period to which the time budget relates using the log data. In any of the embodiments of the invention, the device associated with the dispatcher may be a computing device, such as a portable computing device, running a software application that communicates with a fleet management system e.g. SaaS run by a server. It will be appreciated that it is not necessary for the steps to be performed by a server, and at least some of the steps may be performed e.g. by a device associated with a dispatcher. The method may be performed by one or more server alone, another device alone, or any combination thereof.

The boundary data obtained using the obtained location of interest and determined time budget for the vehicle may be indicative of a boundary enclosing a portion of the geographic area representing an area that is reachable by the vehicle by traversing the navigable network from the location of interest within the determined time budget for the vehicle when using a given ("first") amount of the determined time budget. Preferably the amount of the determined time budget is at least substantially the entire time budget (i.e. the entire time budget or substantially the entire time budget). For example, a value of 95% of the determined time budget may be used to provide a margin for error as discussed above. The reachable area may then be considered to correspond to a maximum reachable area. However, it will be appreciated that lesser proportions of the time budget may, instead, be used. In some embodiments, an indication of a proportion of the time budget upon which the boundary is to be based may be received from the dispatcher.

The method may then further comprise, for the or each vehicle, using the determined time budget for the vehicle to determine boundary data indicative of one or more further boundaries enclosing a portion of the geographic area representing an area that is reachable by the vehicle by traversing the navigable network from the location of interest within the determined time budget from the vehicle when using a lesser amount of the determined time budget (i.e. less than the given amount). Boundary data indicative of a set of a plurality of further boundaries, each enclosing a portion of the geographic area representing an area that is reachable by the vehicle by traversing the navigable network from the location of interest within the determined time budget from the vehicle when using respective progressively smaller amounts of the determined time budget may be determined. For example, each further boundary may be obtained using a predefined proportion of the time budget. Each further boundary may be based on a progressively smaller predefined proportion of the time budget. For example, boundaries based upon 50% and 75% of the time budget respectively may be determined. However, it will be understood that these values are merely exemplary. The proportion(s) of the time budget upon which each boundary is to be based may be input by the dispatcher.

The use of multiple boundaries in respect of different proportions of the time budget or a single boundary based upon only a portion of the time budget may enable reachable areas with desired comfort margins to be identified and/or may provide additional information to the dispatcher for use in assigning trips, e.g. helping to identify those vehicles which may most comfortably perform a trip. In any of the embodiments of the invention, whether a single or multiple boundaries are determined, preferably the obtained location of interest and determined time budget for the vehicle are used to determine (at least) boundary data indicative of a boundary enclosing a portion of the geographic area representing a maximum area that is reachable by the vehicle by traversing the navigable network from the location of interest within the time budget of the vehicle. However, in alternative embodiments it is envisaged that, even where only a single boundary is determined, this may be based upon only a portion of the time budget, such that the reachable area only corresponds to a proportion of a maximum reachable area e.g. 75% thereof, or even lower.

At least the boundary of the reachable area is displayed, and optionally an indication of the reachable area defined within the boundary. Any representation of the boundary may be used which enables the portion of the geographic map enclosed by the boundary to be distinguished from the surrounding areas of the electronic map. For example, the boundary may be marked, and/or the area defined within the boundary may be marked to thereby provide an indication of the boundary. For example, the area within the boundary may be coloured to enable it to be distinguished from surrounding areas of the electronic map.

Where boundary data indicative of one or more further boundary is determined, the method comprises providing data indicative of the or each further determined boundary and to the display device of the dispatcher for display thereon. This may be performed in any of the manners described in relation to the (first) boundary.

Where multiple boundaries in respect of a given vehicle are determined e.g. defining areas reachable using different proportions of the time budget, a representation of the or each boundary may be displayed simultaneously. Thus, a representation of the or each further boundary may be displayed to the dispatcher along with a representation of the first boundary and the location of interest. Each boundary may be displayed on a representation of at least a portion of the navigable network. Each boundary may be represented in a manner to permit the boundaries to be distinguished from each other. For example, the boundaries, or the areas defined between successive boundaries may be coloured differently.

In embodiments in which a first boundary is determined in relation to a first amount of the time budget, and one or more further boundary is determined in relation to one or more further respective amount of the time budget, wherein each amount of the time budget is progressively smaller, each further boundary may define a sub-area within the area defined by the or each preceding boundary. In embodiments a representation of each area defined between one boundary and the next boundary disposed inwardly thereof is provided. A representation of the entire area defined within the innermost boundary may be provided.

Each such representation of an area (whether defined between adjacent boundaries or within an innermost boundary) may be provided in a manner so as to be distinguishable from each other such area e.g. by using different colours. Each area may be representative of an area reachable using an amount of the time budget within a range of values having a limit or limits defined by the amounts of the time budget associated with the or each boundary defining the area.

Boundary data indicative of one or more reachable area may be determined in respect of each one of the one or more vehicles considered in accordance with the invention.

Where multiple boundaries representing reachable areas are determined in respect of each vehicle of a plurality of vehicles, boundaries associated with reachable areas in respect of corresponding amounts of a time budget for each vehicle may be represented in the same manner e.g. using the same colour. This will allow all regions of the electronic map which can be reached by any vehicle based on a particular amount of a time budget to be identified.

Where the reachable areas defined by boundaries determined for different vehicles in respect of corresponding amounts of a respective time budget for the vehicles overlap, the method may comprise determining data indicative of a boundary enclosing a portion of the geographic area representing a single, combined reachable area corresponding to the combination of the reachable areas enclosed by the respective boundaries for the different vehicles in respect of the given amount of a time budget, and providing data indicative of the boundary to the display device of the dispatcher for display thereon.

The combined reachable area will indicate an area which may be reached within the applicable amount of a time budget for the vehicle by any one of the vehicles to which the boundaries indicative of individual reachable areas upon which it was based related. The representation of the boundary indicative of the combined reachable area may be (caused to be) displayed to the dispatcher instead of the representation of the individual boundaries representing respective reachable areas upon which it was based.

It is envisaged that boundary data may be displayed only in respect of vehicles available for a new job, in some embodiments e.g. where the method is used to assign new jobs to vehicles. This may be achieved by only performing the method in relation to a subset of the fleet of vehicles which are available e.g. by an initial filtering step using assigned job data as described above. Where a vehicle becomes unavailable, the boundary data in respect of the vehicle may cease to be displayed.

In embodiments, the present invention may enable information to be presented to a fleet dispatcher in a manner which will enable the dispatcher to readily identify which areas of a navigable network (e.g. as represented by an electronic map) may be reached by which vehicles of the fleet within a given time budget for the vehicle, and hence to more easily assign duties. The invention enables the reachable areas to readily be adjusted in response to live events on the network, facilitating the decision making process. In other embodiments, the determined boundary data enables rest stops to be more easily and effectively assigned to vehicles.

The method of generating information for a dispatcher to facilitate the assignment of a trip to a vehicle in accordance with the invention in any of its embodiments may be triggered in any desired manner. For example, in some embodiments the method is triggered by an input by the dispatcher. In other embodiments the method may be triggered automatically e.g. by the receipt of a new job to be assigned to a vehicle.

The present invention extends to a system for carrying out a method in accordance with any of the embodiments of the invention herein described.

In accordance with a further aspect of the invention there is provided a system as defined in claim 14.

Preferably the system comprises, or is, one or more servers.

The present invention is a computer implemented invention, and any of the steps described in relation to any of the embodiments of the invention may be carried out under the control of a set of one or more processors. The means for carrying out any of the steps described in relation to the system may be a set of one or more processors.

Any of the methods in accordance with the present invention may be implemented at least partially using software e.g. computer programs. The present invention thus also extends to a computer program comprising computer readable instructions executable to perform, or to cause a system e.g. server to perform, a method according to any of the embodiments of the invention.

The invention correspondingly extends to a computer software carrier comprising such software which, when used to operate a system or apparatus comprising data processing means causes, in conjunction with said data processing means, said apparatus or system to carry out the steps of the methods of the present invention. Such a computer software carrier could be a non-transitory physical storage medium such as a ROM chip, CD ROM or disk, or could be a signal such as an electronic signal over wires, an optical signal or a radio signal such as to a satellite or the like. The present invention provides a machine readable medium containing instructions which when read by a machine cause the machine to operate according to the method of any of the embodiments of the invention.

It should be noted that the phrase "associated therewith" in relation to one or more segments should not be interpreted to require any particular restriction on data storage locations. The phrase only requires that the features are identifiably related to a segment. Therefore association may for example be achieved by means of a reference to a side file, potentially located in a remote server.

The term "segment" as used herein takes its usual meaning in the art. A segment may be a navigable link that connects two nodes, or any portion thereof. While embodiments of the present invention are described with reference to road segments, it should be realised that the invention may also be applicable to other navigable segments, such as segments of a path, river, canal, cycle path, tow path, railway line, or the like. For ease of reference these are commonly referred to as a road segment, but any reference to a "road segment" may be replaced by a reference to a "navigable segment" or any specific type or types of such segments. In particular, while various embodiments of operations have been described which may be performed in the method and by the system, it will be appreciated that any one or more or all of these operations may be performed in the method and by the system, in any combination, as desired, and as appropriate.

Advantages of these embodiments are set out hereafter, and further details and features of each of these embodiments are defined in the accompanying dependent claims and elsewhere in the following detailed description.

### Brief Description of the Drawings

Embodiments of the invention will now be described, by way of example only, with reference to the accompanying Figures, in which;
Figure 1A is a flow chart illustrating one embodiment of a method for assigning a new job to a vehicle in accordance with the invention;
Figure 1B is a flow chart illustrating one embodiment of a method for assigning a rest stop to a vehicle in accordance with the invention;
Figure 2 illustrates a set of boundaries and reachable areas determined in respect of a vehicle;
Figure 3 illustrates sets of overlapping reachable areas determined in respect of five vehicles;
Figure 4 illustrates the change in the boundaries and reachable areas of Figure 3 when one of the vehicles is no longer available;
Figure 5 illustrates a further example of boundaries and reachable areas determined in respect of five vehicles;
Figure 6 illustrates the effect on the boundaries and reachable areas determined in Figure 5 when one vehicle is no longer available;
and Figure 7 illustrates one example of a system which may be used to implement the methods described herein.

### Detailed description of the Figures

Embodiments of the present invention are described with reference to road segments. It should be realised that the invention may also be applicable to other navigable segments, such as segments of a path, river, canal, cycle path, tow path, railway line, or the like. For ease of reference these are commonly referred to as a road segment.

The present invention provides a method which is used in the context of a fleet management system.

When managing a vehicle fleet, one particularly important factor to take into account when assigning rest stops or new jobs is the remaining driving time for the vehicles. The remaining driving time is the remaining permissible time that a vehicle may legally be operated before a regulated stop is required. A vehicle in a fleet may be operated by a single driver, in which case the remaining driving time for the vehicle will correspond to that for the driver, or by multiple drivers, in which case the remaining driving time for the vehicle will be based upon the remaining driving times for each of the drivers. The remaining driving time for a driver will be dictated by applicable regulations. Vehicles in a fleet are equipped with one or more electronic devices for logging data indicative of the activities of the one or more drivers of the vehicle, and which may be used to determine a remaining driving time for the vehicle from a current time in a predefined period. For example, vehicles operating in Europe are equipped with a digital tachograph to ensure compliance with the drivers' working hours regulation EC 561/2006. Similarly, vehicles operating in the US are equipped with an electronic logging device (ELD) to ensure compliance with the hours of service (HOS) rules.

Compliance with driving time regulations is of great importance to a fleet dispatcher, and potential fines for violating rules or regulations are high. The Applicant has realised that existing FMS (fleet management systems) fail to enable a dispatcher to readily and reliably take remaining driving time into consideration e.g. when assigning new jobs or rest stops to vehicles. This is a particular problem when planning a response e.g. reassigning jobs in response to unplanned events. Such events may require a fleet dispatcher to make estimates of which vehicles are best suited for a new job considering the remaining driving time available to each vehicle, and other factors, including a distance of the vehicle to the location associated with the new job etc. Planning responses to unplanned events becomes even more complex in the case of considering more than one vehicle of a fleet at a time. The need to take remaining driving time into consideration adds another layer of complexity when responding to dynamic changes when performing fleet operational planning.

Existing FMS may result in a dispatcher failing to adequately consider remaining driving time, which may result in sub-optimal planning and assignment of jobs to vehicles, inability to provide accurate information to third parties e.g. regarding arrival times of vehicles at jobs, or even failure to comply with driving time regulations.

A Fleet Management System (FMS) is an industry term used to refer to a broad range of solutions for vehicle-related applications that help companies manage their fleets of vehicles, such as cars, vans, trucks and buses. A fleet management system (FMS) may be provided by a combination of vehicle-based technology (e.g. telematics devices, positioning systems) and. Software-as-a-Service (SaaS). An FMS may be intended to help a fleet dispatcher to improve overall fleet efficiency and vehicle performance, e.g. save fuel, improve driver safety, aid risk management, enhance job-dispatching etc. An FMS may help a fleet dispatcher to manage the use of vehicles e.g. the assignment of routes and destinations, and may also help with the management of vehicle drivers, and destinations. This may be of assistance where vehicles in the fleet pick up or deliver goods at a multiple destinations, perform a service operation at several destinations, etc. The FMS dispatcher has a need to manage the cost of operating a fleet.

Typically, the management of fleet operations e.g. the assignment of duties, is performed by a human dispatcher with assistance from various planning tools, including an FMS. These tools may be used to generate a vehicle travel plan, which may then be provided to the FMS. However, inaccuracies in vehicle plans commonly occur due to dynamic changes caused by unforeseen circumstances, e.g. additional work, accidents, road closures, car breakdowns, sickness, customer cancellations, etc. The fleet dispatcher must update vehicle plans to try to compensate for these unplanned events e.g. by redistributing assignments to the current set of operating vehicles and drivers. Given the complexity of such tasks, although remaining driving time may be available to the dispatcher via some system, it is difficult to take this into account together with other factors, and dispatchers may simply ignore remaining driving time when managing operations, particularly when making changes in response to unplanned events.

Embodiments of the present invention provide methods for determining a reachable area for a vehicle of a fleet based on a time budget, which takes into account remaining driving time for the vehicle. The invention provides information regarding the reachable area to a dispatcher in a manner which enables the dispatcher to more readily take the information into account when assigning trips e.g. to new jobs or rest stops to vehicles.

The invention may be implemented by means of a server running FMS software. The server is in communication with a remote device of a fleet dispatcher e.g. tablet, desktop, mobile etc. running a FMS application.

The server obtains data over a wireless communication network from each vehicle in a fleet of vehicles from devices associated with the vehicle e.g. telematics devices. Alternatively, it is envisaged that the devices associated with the vehicles may send data to the device of the fleet dispatcher running the FMS application, which may then communicate with the server to provide the data thereto as required.

The fleet dispatcher uses the FMS to update vehicle plans e.g. the assignment of jobs or rest stops, etc. The FMS system sends the updated vehicle plan(s) to the relevant vehicle devices. The fleet dispatcher may make updates via their own device, which may then cause the updates to be sent out to the devices (typically via the server).

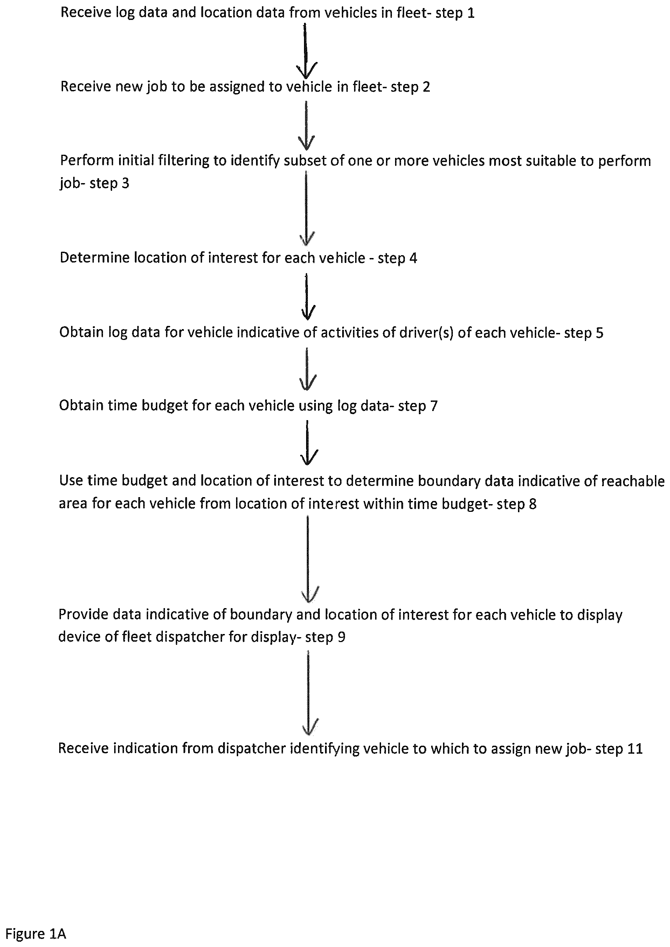

An embodiment of the method of the invention will be described by reference to the flow chart of Figure 1A. In the embodiment described this method is implemented by a server, although this need not necessarily the case. For example, the method may be implemented by a device associated with a fleet dispatcher, or some steps may be performed by a server, and some by the dispatcher's device, or the method may be performed using more than one server, or any other suitable arrangement may be used as discussed further below.

Figure 1A illustrates an embodiment of the present invention used to assign a new job to a vehicle from a fleet of vehicles traversing a navigable network in a geographic area. Each vehicle is equipped with one or more electronic devices for logging the activities of one or more drivers associated with the vehicle and for determining the location of the vehicle in the geographic area. For example, the vehicle may include a positioning device such as a GNSS or GSM positioning device for providing location data. The log data and location data may be provided to the server via a telematics control unit associated with the vehicle. The one or more electronic devices for logging the activities of the one or more drivers may comprise a tachograph or electronic logging device, or similar.. The log data provided by the one or more electronic devices may be used to determine a remaining driving time for the vehicle from a current time in a predefined period (based on the remaining driving time for the or each driver of the vehicle). One example of a telematics control unit which may be used to provide location and vehicle log data to the server from the one or more electronic devices associated with the vehicle is a TomTom^{®} LINK device. The location data may, in some embodiments, be obtained from an electronic device of a positioning system of the telematics control unit. However, it will be appreciated that it is not necessary to use a telematics control unit, and data may be provided directly to the server from the one or more electronic devices. Whether or not a telematics control unit is used, it will be appreciated that the log data and location data may be provided by the same or different electronic devices, and any one of the electronic devices may or may not be integrated with the vehicle.

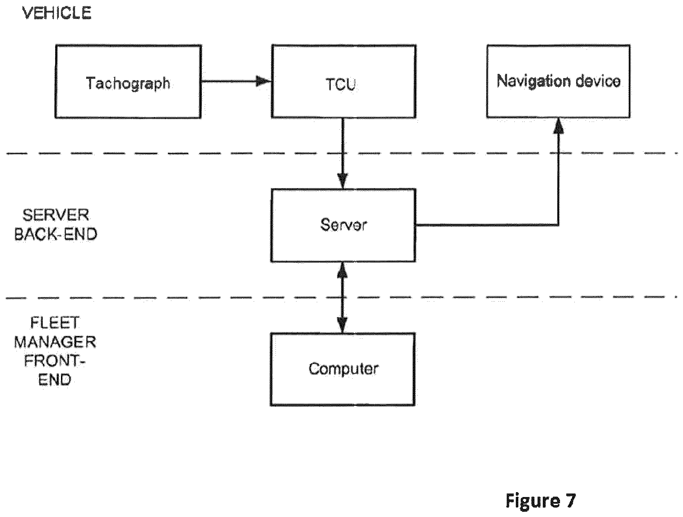

Figure 7 illustrates one exemplary system which may be used to implement the methods described herein.

In step 1 a server receives log data and location data from each vehicle e.g. over an appropriate cellular communication channel. Each vehicle in the fleet is associated with a vehicle ID.

The server also has access to job data indicative of existing jobs assigned to each vehicle in the fleet of vehicles. Each job is associated with a location i.e. a job location. For each vehicle, the server has access to details of each job assigned thereto (if any). Where multiple jobs have been assigned to a vehicle, the job data will include an ordered list of the jobs. Each job may also be associated with a predicted job duration.

In step 2 a new job to be assigned to a vehicle in the fleet of vehicles is received by the server. The job is associated with a location. The job may also be associated with a desired start time, which may be immediately.

In step 3 the server may perform an initial filtering step to identify a subset of the vehicles that are potentially most suitable to perform the job. This step is optional. The way in which the filtering is performed may depend upon the particular context of the method. For example, the filtering step may identify those vehicles available to perform the new job, and/or that are within a certain distance or travel time of the location associated with the job. The travel time or distance may be set by reference to a desired start time of a job. A closest vehicle in terms of distance/time might already be performing a job, or travelling to an existing job. Thus, availability may be considered in combination with spatial and/or temporal proximity. In one exemplary arrangement, in which the method is used to assign jobs to emergency or first response vehicles, those vehicles which are available and/or can reach the location of the new job by the desired start time, or within a certain time period thereafter may be identified. It will be appreciated that identifying vehicles within a certain spatial and/or temporal proximity to the location of the new job may be performed using appropriate routing calculations. The server may perform calls on an appropriate routing service when performing this step.

In other embodiments, the dispatcher may indicate the subset of vehicles to be considered.

The server then performs a method of generating information for the dispatcher to facilitate the assignment of the new job to a vehicle from the fleet of vehicles. This method is performed in relation to at least some i.e. one or more of the vehicles. The vehicles may be a subset as identified in step 3 or e.g. as indicated by the dispatcher.

The following steps are performed in relation to the or each vehicle considered.

In step 4, a location of interest is determined in respect of the vehicle. The location of interest is a location relevant to determining a reachable area for the vehicle taking into account remaining driving time. The location of interest may be a current location or a future location. Thus the location of interest may correspond to, or be obtained using the location data for the vehicle and/or the location of any jobs assigned to the vehicle as provided by the job data.

The relevant location will depend upon the context in which the method is performed, and potentially the job status of the vehicle. For example, where a vehicle is available, the current location may be used. Where a vehicle is currently performing a job, and no subsequent job has been assigned, the current location may similarly be used. Where a vehicle is heading to a job, and that job is the only job allocated to the vehicle, the location of that job may be used. If the vehicle has multiple jobs assigned (within an applicable time window), the location of interest may be the location of the final job allocated to the vehicle. In general, the location of interest will be the location from which the vehicle may set out in order to reach the new job.

In step 5, log data indicative of the activities of the one or more drivers associated with the vehicle is obtained by the server e.g. via a telematics control unit of the vehicle. This log data includes data which may be used to determine a remaining driving time for the vehicle from a current time in a predefined period. The remaining driving time from a current time in a predefined period is the remaining time that the vehicle may continue to be operated by the driver or drivers associated therewith from a current time in the predefined period. The remaining driving time data may be determined in any suitable manner based on log data received from the vehicle. Where a vehicle is a multi- driver vehicle, determining of the remaining driving time for the vehicle may involve an intermediate step of determining remaining driving time data for the individual drivers, or a suitable function may be used which may directly determine the remaining driving time for the vehicle based on the log data for the individual drivers.

Determination of the remaining driving time for a vehicle based on the log data may be performed by the or a server based on the log data. For example, this may be performed by a suitable module of a FMS system. The log data may be indicative of changes in work state of the driver(s) of the vehicle e.g. between resting, driving, on standby, and performing other work states. Each driver will be legally required to conform to a specific set of rules defining their resting and working periods. These rules will depend upon factors such as country of operation, type of vehicle driven, type of work undertaken, specific labour agreements etc. Each vehicle and driver in the system may be treated as separate entity by the FMS system. The specific set of rules that a driver must operate under may be configured as an attribute to the driver entity. For example, an FMS operator may be able to assign rule sets from a drop down list. The FMS system may then continually update a remaining driving time for a driver based upon real-time vehicle log data. For any driver in the system, a remaining driving time from a current time in any predefined period may thus be determined. Where a vehicle is operated by more than one driver, a remaining driving time for the vehicle entity from a current time in a predefined period may be determined directly or indirectly based on the log data, the rules governing the operation of each driver, and the rules governing multi-driver operation. This remaining driving time for the vehicle may be determined based on the individual remaining driving times for the drivers from the current time in the predefined period, or may be determined directly from the log data without necessarily determining such intermediate data. Thus, a remaining driving time for the vehicle from the current time in a predefined period may also be known at any time. A remaining driving time may be determined in respect of any suitable period from the current time. The FMS system may be arranged to provide a remaining driving time for a vehicle and/or driver of the system in respect of a predefined period which is preset e.g. a period until the next break is required, or which may be customised e.g. by dispatcher specifying the period. The applicable remaining driving time for determining the time budget may therefore be provided by specifying a predefined period corresponding to the given time period upon which the time budget is based, and requesting the remaining driving time for the vehicle from the FMS system.

In step 7 a time budget for the vehicle is obtained using the log data. The time budget represents the amount of time that the vehicle can be legally operated by the one or more drivers associated with the vehicle within a given time period starting from a time of interest.

The time of interest may be a current time or a future time, and is the relevant time upon which a reachable area for the vehicle is to be based. As with the location of interest, the relevant time of interest for a vehicle may depend upon various factors, including the context of the method, and jobs already assigned to a vehicle. For example, where a vehicle is available for a new job, the current time may be used. Where a vehicle is currently performing a job, then the predicted time at which the job is due to be completed may be used as the time of interest (which may be obtained based upon the expected duration of the job). Where a vehicle is heading to a job, the time of interest may similarly be the predicted time at which the job is due to be completed (which may be obtained based upon the expected travel time to the job and the expected duration of the job). If a vehicle has multiple jobs assigned to it, then the time of interest may be based upon the predicted time at which the final job is due to be completed (e.g. based on the expected durations of each job and the expected travel time between jobs). Generally the time of interest will be the time at which the vehicle is available to leave the location of interest to set out for the new job.

The time budget is determined using a remaining driving time for the vehicle from a current time in a predefined period corresponding to the given period to which the time budget relates, and which may be obtained in the manner described above. Some adjustment of this remaining driving time may be required where the time of interest is not a current time. The time budget is in relation to a given period starting from the time of interest. The period might be e.g. a 24 hr or 2 hour period, or even a weekly or two weekly period. The period may be specified e.g. by a dispatcher or set by the system, depending upon the relevant period for a particular application or context. The given time period effectively sets a time window of interest, and may be e.g. in the context of assigning jobs to emergency vehicles, a desired response time.

Where a single driver is associated with the vehicle, the time budget for the vehicle will be based on the remaining driving time from the current time for the driver in the given period, while, where multiple drivers are associated with the vehicle, the time budget will be based on the remaining driving times for each driver from the current time in the given period (which may be a simple sum thereof, or, depending upon relevant regulations, may be less than the sum of the remaining driving times for each driver e.g. where non- driving working time acts to reduce the remaining driving time of a driver). The remaining driving time from the current time in the given period will take into account legal requirements in relation to breaks etc. Depending upon the period selected, the remaining driving time may be made up of one or more continuous period of driving (e.g. where the given period is sufficiently long that it includes one or more mandatory rest periods).

The remaining driving time for a driver (or vehicle) may be obtained directly or indirectly using the log data. The remaining driving time or the time budget for a vehicle may be provided by a different server to that which performs the other steps of the method e.g. by the server performing the method requesting a remaining driving time or time budget for a vehicle from the server, which may then perform any necessary processing of remaining driving time log data received from the vehicle. For example, the server may provide a vehicle ID, given time period to be considered and, where applicable, the start time of interest for the time budget to be determined to another server, e.g. a remaining driving time service providing server, which may then provide the required time budget for the vehicle.

Determining the time budget also takes into account the job data. By way of example, where a vehicle is available, or is performing an existing job, the time budget for a single driver vehicle may be correspond to the current remaining driving time for the driver (or, for a multiple driver vehicle, will be based upon the remaining driving time for each driver). Where a vehicle is travelling to an existing job, the time budget may be based upon the current remaining driving time for the driver or drivers minus the expected time to travel to the existing job. Thus, some calculation may be required to determine a time budget using the remaining driving time for a vehicle starting from a time of interest where this is not the current time, since the remaining driving time is typically based on a current time.

In step 8, the determined time budget is used together with the location of interest to determine boundary data indicative of a boundary enclosing a portion of the geographic area representing an area that is reachable by the vehicle by traversing the navigable network from the location of interest within the determined time budget for the vehicle. In other words, a boundary defining a reachable area for the vehicle is determined. This is performed by exploring segments of an electronic map representative of navigable elements of the navigable network from a position on a segment representative of the location of interest using a search algorithm having an associated cost function. The cost function may be selected or determined based upon information provided e.g. by the dispatcher as to the type of route required e.g. "fastest" or "eco" i.e. most fuel or energy efficient. Various techniques which may be used in determining a reachability area for a vehicle based upon one or more constraints are described in WO 2014/001565A1, in the name of TomTom Development Germany GMBH, the entire content of which is incorporated herein by reference.

It will be appreciated that, in addition to the time budget, other factors limiting the reachable area for a vehicle may be taken into account when determining the boundary e.g. energy, such as fuel or electricity budgets where these may further limit the reachable range. These may be based on a current energy level e.g. fuel or charge level, which could be an actual measured or estimated level. Such data may be obtained from any suitable source.

The determination of the boundary may also take into account vehicle profile data. Such data may be available to the server. Vehicle profile data may include data identifying a vehicle type, together with other attributes such as vehicle length, width, height, axle weight and overall weight, hazardous material loads etc. Such data may be taken into account by influencing the costs associated with segments of the electronic map, such that segments which the vehicle is unable to, or should not traverse, are associated with higher cost. Vehicle profiles and their use by a routing engine are described in WO 2017/032816A1 of TomTom Navigation B.V and TomTom Telematics B.V, the entire content of which is incorporated herein by reference.

The boundary may be determined based upon the entire time budget, or a proportion thereof i.e. to define a reachable area corresponding to the portion of the geographic area reachable using the entire time budget or a proportion thereof e.g. 95%. Determining the boundary based upon less than the entire time budget may provide some margin for error. In some embodiments, the dispatcher may indicate the proportion of the time budget to be used.

In step 9 data indicative of the determined boundary and the location of interest upon which it is based is provided to a display device of the fleet dispatcher, and displayed thereon, superposed on a representation of at least a portion of the navigable network.

The dispatcher is thus provided with an indication, for each vehicle being considered, of the area which it is expected to be able to reach from the location of interest without contravening a time budget for the vehicle representing the amount of time that the vehicle may be legally operated by the driver(s) thereof. The dispatcher is provided with a clear indication, for each vehicle, of the area which may be reached by the vehicle within the time period being considered without contravening regulations. The dispatcher may compare the reachable areas for each vehicle and use these to determine to which vehicle to assign the new job.

In step 10 the server receives an indication from the dispatcher as to which vehicle the new job is to be assigned. The indication includes at least the location associated with the new job. The system may then take any desired steps to assign the job to the vehicle e.g. by providing routing information to the vehicle for travel to the location associated with the job.

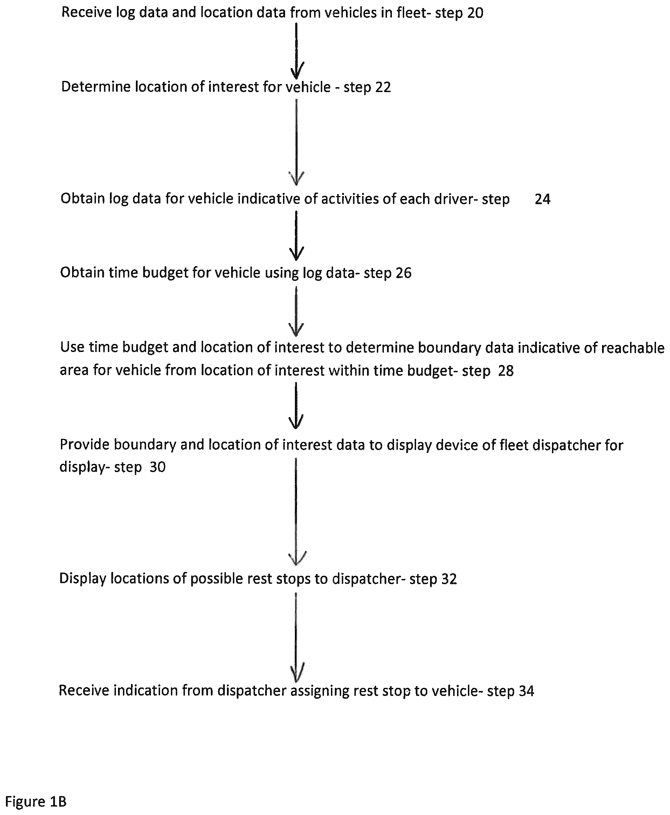

In accordance with a second embodiment, described by reference to the flow chart of Figure 1B, the method is used to assign a rest stop to a vehicle. This method is similar to that previously described by reference to Figure 1A, and only the difference will be described in detail.

In step 20 a server receives log data and location data from each vehicle e.g. over an appropriate cellular communication channel.

As in the previous embodiment the server also has access to job data indicative of jobs assigned to each vehicle in the fleet of vehicles.

The server then performs a method of generating information for the dispatcher to facilitate the assignment of a rest stop to a vehicle from the fleet of vehicles. This method is performed in relation to at least some i.e. one or more of the vehicles. The method of this embodiment may typically be performed in relation to a single vehicle, but could also be performed in relation to a subset of vehicles from the fleet in proximity to a particular location. Such a subset may be identified using an appropriate filtering step based on vehicle location. The location considered might be e.g. a location of a possible rest stop.

The following steps are performed in relation to the or each vehicle considered.

In step 22, a location of interest is determined in respect of the vehicle. The location of interest is a location relevant to determining a reachable area for the vehicle taking into account remaining driving time. The location of interest may be a current location or a future location. Thus the location of interest may correspond to, or be obtained using the location data for the vehicle and/or the location of any jobs assigned to the vehicle as provided by the job data. Where the vehicle is available, the location may be a current location, while, where a vehicle is currently performing a job, the location may be the location of the job. Where multiple jobs are assigned to the vehicle, the location may be the location of the final job.

In step 24, log data for the vehicle is obtained by the server e.g. via a telematics control unit of the vehicle. This log data includes data which may be used to determine a remaining driving time for the vehicle. The remaining driving time is the remaining time that the vehicle may continue to be operated by the driver or drivers associated with from a current time.

In step 26 a time budget for the vehicle is obtained using the log data. The time budget represents the amount of time that the vehicle can be legally operated by the one or more drivers associated with the vehicle until a rest stop is required starting from a time of interest.

The time of interest may be a current time or a future time, and is the relevant time upon which a reachable area for the vehicle is to be based. Generally the time of interest will be the time at which the vehicle is available to leave the location of interest to travel to a rest stop. Thus, the time of interest may be a time at which a (final) job assigned to the vehicle is expected to be completed, or, if no job is assigned thereto, the current time.

The time budget is determined as described in relation to the previous embodiment, but this time is in respect of a given period from the start time of interest corresponding to the remaining driving time for the vehicle until a rest stop is required. Such remaining driving time may be obtained based upon the log data from the vehicle as previously described. Of course, it is envisaged that, as described in relation to the earlier embodiment, the determination of remaining driving time data for a vehicle and/or the time budget, may be performed by another server, upon request by the server performing the other steps of the method, in the same manner described in relation to Figure 1A.

In step 28, the determined time budget is used together with the location of interest to determine boundary data indicative of a boundary enclosing a portion of the geographic area representing an area that is reachable by the vehicle by traversing the navigable network from the location of interest within the determined time budget for the vehicle. This may be performed in the same manner as described in relation to the earlier embodiment, and may take into account the energy budget. The boundary may be based upon using the entire time budget, or a proportion thereof, as described in relation to the earlier embodiment.

In step 30 data indicative of the (or each) determined boundary and the location of interest upon which it is based is provided to a display device of the fleet dispatcher, and displayed thereon.

In step 32, the locations of possible rest stops are also displayed to the dispatcher on the display device.

The dispatcher is thus provided with an indication, for each vehicle being considered which it may be able to reach from the location of interest without contravening a time budget for the vehicle representing the amount of time that the vehicle may be legally operated by the driver(s) thereof before a rest stop is required. The dispatcher is provided with a clear indication, for each vehicle, of the area which may be reached by the vehicle before a rest stop is required. The dispatcher may compare the reachable areas for each vehicle to the locations of the possible rest stops and use these to assign a rest stop to the vehicle(s).

In step 34 the server receives an indication from the dispatcher assigning a rest stop to the vehicle. The indication includes at least the location of the rest stop. The system may then take any desired steps to direct the vehicle to the rest stop e.g. by providing routing information to the vehicle for travel to the location associated with the rest stop.

In any of the embodiments of the invention, the electronic map data comprises segments connected by nodes, and the segments are indicative of the road elements of the road network.

The reachable area is determined in a manner which takes into account the road network. Thus, it is recognised that the distance a vehicle may travel in different directions from the location of interest subject to the time budget may differ, depending upon the properties of the elements of the navigable network, current conditions etc.

The methods of the invention may take into account live conditions on the road network. This may be achieved, in embodiments, by adjusting traversal times for segments, or other costs associated with segments used in determining the boundary of the reachable area, to reflect current conditions. The conditions may include traffic and/or road conditions as exemplified below. Furthermore, the cost values used in exploring segments of the electronic map in obtaining the boundary may be time dependent e.g. based on typical traffic conditions at different times of day. Thus, applicable cost values may be used to obtain an accurate reachable area applicable to the relevant time. Historical data indicative of applicable costs e.g. traversal times to traverse for segments at different times may be obtained and used.

The list below shows examples of the data that may be available to the system e.g. server or servers performing the method, and used in determining a boundary representing a reachable area in any of the embodiments of the invention. The data may be determined by the server e.g. based on vehicle log data or other data obtained from one or more electronic devices e.g. via a TCU associated with a vehicle, and/or may be obtained from other sources e.g. from another server, which may also receive data from the electronic device(s) associated with vehicles and perform processing thereon to provide suitable data e.g. remaining driving time data:
- Current location - this may be obtained from e.g. a GNSS device associated with a vehicle over a cellular communications channel, e.g. via a telematics control unit (TCU) of the vehicle.
- Energy budget. Each vehicle in the fleet has a current remaining amount of energy for powering the vehicle. The determination of the boundary may take into account a current remaining energy level of the vehicle, which may act as a further constraint to the reachable area in addition to the time budget. An energy budget is determined. Energy level data may be obtained from electronic device(s) e.g. a telematics control unit associated with a vehicle. This may be actual measured energy level data or predicted energy level data, depending upon the level of integration of a telematics control unit or other device(s) with the vehicle. Alternatively or additionally, historic data on the energy needed for a vehicle to traverse road segments e.g. under various traffic and road conditions may be used in determining the boundary. This may be used e.g. in determining a cost for traversing a segment relating to energy budget and used in exploring segments of the electronic map to determine the boundary where the search algorithm is based on a cost function taking into account energy consumption, e.g. where an "eco" route has been selected.

- Driving time. Each driver has a remaining driving time in a given period starting from a current time in which they may legally drive a vehicle. Real-time remaining driving time data for the driver(s) of a vehicle from a current time may be provided based on data obtained from an interface to a tachograph, and is used in determining the time budget. Remaining driving time for a vehicle in a given period may be determined based on the remaining driving time for the driver(s) of a vehicle. Such data may be determined by a server, which may or may not be the server performing the methods of assigning a trip to a vehicle described herein. The remaining driving time data may be obtained e.g. from a suitable remaining driving time service provided by another server e.g. based on inputting a vehicle or driver ID, and time period of interest.
- Driver efficiency. Some drivers have a more economical driving profile and can travel a longer distance for a given vehicle and time budget. Historical data may be obtained by the FMS software in any suitable manner, and used to improve the accuracy of the boundary determinations taking into account differences between individual drivers. This may be done e.g. by adjusting cost values determined for segments, or in any other suitable manner.
- Traffic conditions. The FMS software may comprise an interface to one or more navigation systems that collect real time traffic information to estimate congestion. Congestion and road parameters determine the time necessary to travel a road segment.
- Road conditions. The FMS software may comprise an interface to a component that provides real time road network information e.g. road closures, partial road closures, accidents, weather impact on roads. The road condition information impacts available routes and travel times.
- Traffic regulations. A country may have specific regulations restricting driving without special permit e.g. on Sunday or during holidays for specific vehicle types.
- Vehicle profile data- data indicative of a vehicle type, together with attributes such as vehicle length, width, height, axle weight and overall weight, hazardous material loads etc. may be available, and can be used in determining the boundary e.g. in exploring segments of the electronic map.
- Job data- for each vehicle, an ordered list of each job already assigned to the vehicle, including, for each job, a job location, and predicted job duration.

In general, at least the remaining driving time and current location for vehicles is known, and the other data may enhance the accuracy of boundary determination.

It will be appreciated that the methods described herein may be implemented in various manners, using one or more servers and/or devices associated with a dispatcher.

In the exemplary embodiments described, the methods described herein may be implemented using a FMS. A fleet dispatcher may use a web browser in their device (e.g. PC or mobile device) to interact with a server running the FMS software. However, other arrangements may be used. For example, the boundary data may be determined using an application run by a device of the dispatcher e.g. PC or mobile device. In either case, some of the above information (e.g. map data, traffic data, road closure information) may need to be obtained from other sources. For example, a map service provider may provide map and traffic data.

Wherever the boundary data and location of interest for a vehicle are determined, they may be displayed on a device of the dispatcher, e.g. a PC or mobile device. The device may then receive the information regarding boundary and location of interest the server. For example, a server may make its data available to an application running on the device, or instead may enable a user to interact therewith using a web browser.

Some exemplary embodiments of boundaries and reachable areas which may be determined in accordance with the invention in its various embodiments, and displayed to a dispatcher, will now be described.

It will be appreciated that one or more boundary may be determined in respect of a given vehicle. This may be used in embodiments for assigning a new job or a rest stop to a vehicle. Obtaining boundaries based upon using a given amount of the time budget e.g. the entire budget or substantially the entire time budget, and one or more lesser amounts of the time budget may help to increase the margin for error, and enable a dispatcher to assign a new job or rest stop with a desired level of security. Rather than using multiple boundaries, of course, a safety margin may be obtained instead by providing a single boundary based upon an appropriate proportion of the time budget e.g. 90 or 95% as desired.

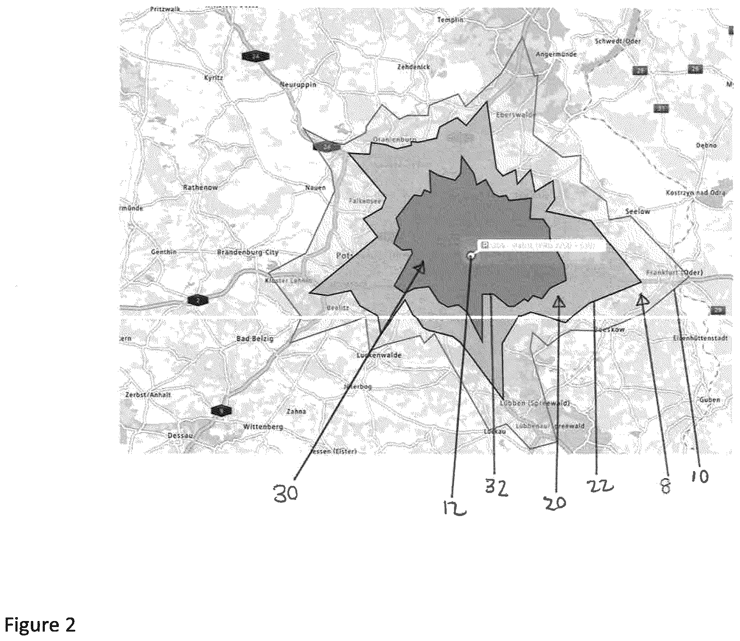

Figure 2 illustrates a method in which multiple boundaries and hence reachable areas are obtained for a vehicle having a current location 12, based on using different amounts of the time budget for the vehicle. Figure 2 illustrates a representation of the reachable areas with respect to an electronic map which may be displayed to the dispatcher to assist them in assigning a rest stop or new job to a vehicle in accordance with the methods described herein. Of course, rather than a current location, the location may be a location of a (final) existing assigned job for the vehicle.

In Figure 2, two reachable areas 20, 30 are shown inside the reachable area 8. The outermost reachable area 8 having a boundary (perimeter) 10 is obtained based on using the entire time budget. A second reachable area 20, having a boundary (perimeter) 22 is then determined based on using 75% of the time budget. A third reachable area 30 having a boundary (perimeter) 32 is determined based on using 50% of the time budget.

The areas defined between the boundaries of each reachable area may each be shaded a different colour as shown in Figure 2. In this example, the area (inner darkest grey area) defined within the innermost boundary 32 represents the reachable area with up to 50% of the time budget, the area (middle area shaded mid-grey) between the boundary 32 of this reachable area and the boundary 22 of the next outer reachable area 20 represents the reachable area with from 50-75% of the time budget. The outermost area (shaded lightest grey) defined between the boundary 22 of the reachable area 20 and the boundary 10 of the outermost reachable area 8 corresponds to the area reachable using 75-100% of the time budget.

Figure 2 illustrates the way in which multiple reachable areas may be displayed in respect of a single vehicle. Of course, rather than displaying multiple reachable areas based on using different amounts of the time budget, a single reachable area might instead be displayed, preferably incorporating a suitable margin for error. This type of embodiment using a single vehicle might be particularly applicable to assigning a rest stop to the vehicle. The locations of rest stops may be displayed on the map, and the dispatcher may specify in any suitable manner e.g. through interaction with the display which rest stop should be assigned to the vehicle. Of course, where a plurality of vehicles e.g. a subset of vehicles are to be considered, one or more reachable area may be displayed in a similar manner as shown in Figure 2 for each vehicle, based on the location of interest e.g. current location or location of a final existing job in respect of the vehicle. Where the method is being used to assign a new job to a vehicle, reachable area(s) may be displayed for a subset of vehicles corresponding to those which are available for a new job and/or which are within a given distance or travel time of a location of a new job. Regardless of the application of the method e.g. for assigning a new job or a rest stop, the location of interest may be a current location for each vehicle, or a future location e.g. of a final existing job. Where the location is a future location, the time of interest upon which the time budget is based will typically be a future time e.g. a time at which the vehicle may be available to leave the location.

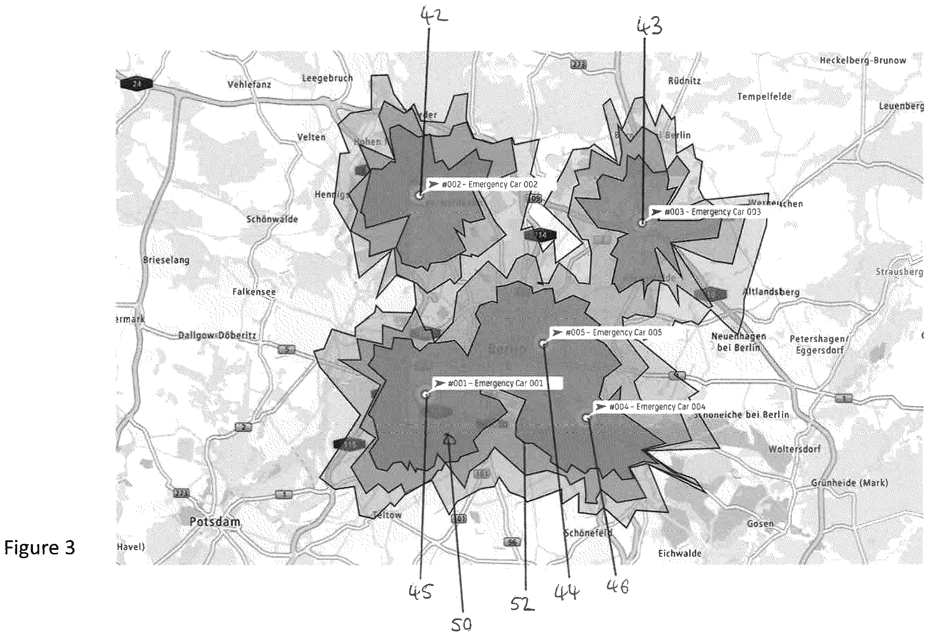

Figure 3 illustrates a situation in which there are five emergency vehicles having current locations within the area covered by the map, vehicles 42, 43, 44, 45 and 46. In this context, the reachable areas for each vehicle are based on a current location and the time budget is based on a current time. Each vehicle shown is available for a new assignment. The vehicles may be a subset of a fleet of vehicles which are expected to be able to reach the location associated with a new job by a desired start time of the job, or within a predetermined period thereafter.

For each vehicle, a set of boundaries is determined, each indicative of a reachable area, based on first, second and third amounts of the time budget for the vehicle. These boundaries may be based upon different amounts of the time budget as illustrated in Figure 2 above e.g. 50%, 75%, and 100% of the time budget. The inner, middle and outer reachable areas defined by the boundaries obtained for each vehicle are shaded darkest grey, mid-grey and lightest grey, as in the Figure 2 example.

As shown in Figure 3, some of the reachable areas defined by the boundaries in respect of corresponding amounts of the time budget overlap for the different vehicles, i.e. the inner, middle or outer reachable areas associated with different ones of the vehicles may overlap. In this situation, a boundary defining a single, combined reachable area is obtained. The boundary encompasses the combined area defined by the corresponding overlapping reachable areas. In the example of Figure 3, the innermost reachable areas for vehicles 44-46 overlap in this way, and a boundary 52 defining a single, combined inner reachable area 50 is defined. It will be seen that boundaries indicative of combined "inner", "middle" and "outer" areas are obtained for the set of vehicles, with the combined inner, middle and outer areas having the usual darkest, mid and light grey shading. The resulting display enables the dispatcher to readily assign a new job to one of the emergency vehicles based on the location of the job, and a consideration of which vehicle may reach the location most easily within the time budget thereof.

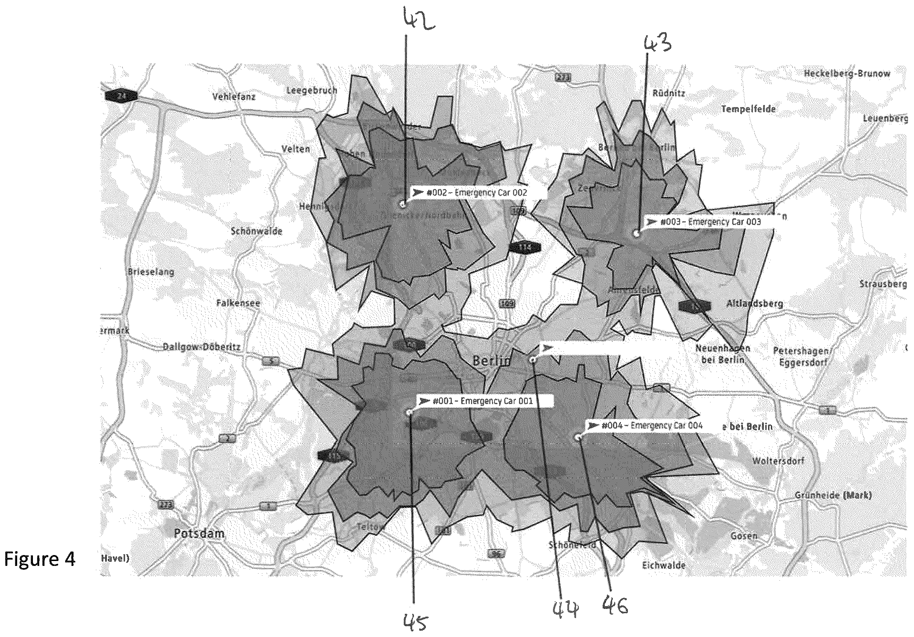

As a further example, Figure 4 shows the same map area with five vehicles, of which one vehicle, vehicle 44 is now not available for another job. Boundary and reachable area data is not determined for this vehicle i.e. it is not included in the subset of vehicles considered. Boundary and reachable area data based on using 50%, 75% and 100% of the time budget for the vehicle is determined for the other four vehicles, and, where there is overlap between corresponding reachable areas for different vehicles, a boundary defining a single combined area is determined as in the Figure 3 case. The overall pattern of reachable areas provided for the vehicles is different to that in the Figure 3 case.

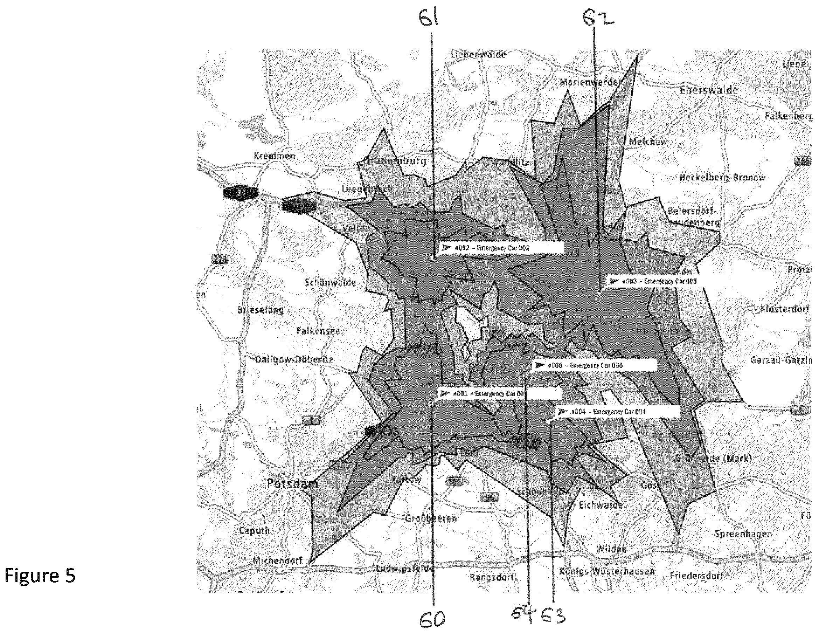

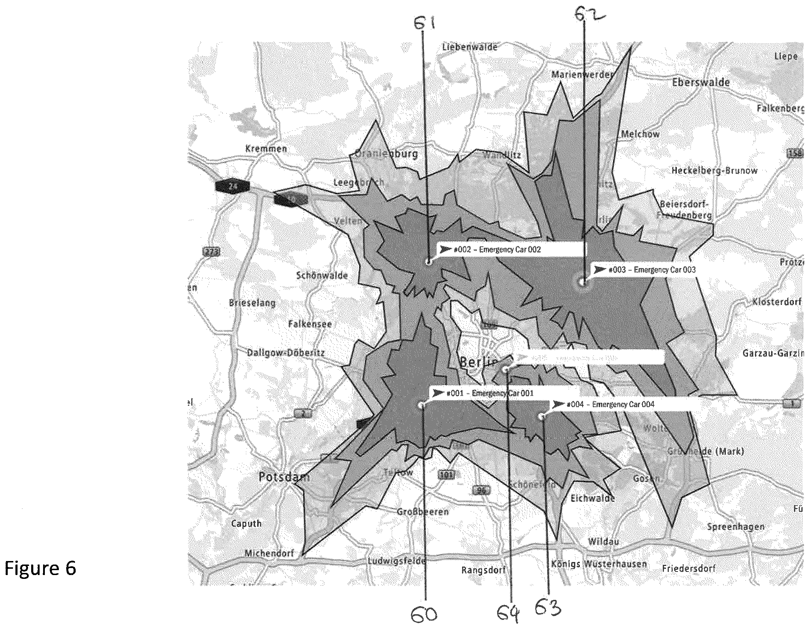

Figures 5 and 6 are similar to Figures 3 and 4, but this time based on a larger time budget based on a longer given period from the current time, set by a longer target response time. The outermost boundary for each vehicle is based on using 100% of this time budget, and the middle and inner boundaries for each vehicle being set at 75% and 50% thereof. Figure 5 illustrates the case where all five vehicles 60, 61, 62, 63, 64 are available, and Figure 6 the case where only 4 are available (60, 61, 62, 63).

In both cases, boundaries defining combined reachable areas based on the boundaries of the corresponding reachable areas for each vehicle have been determined. As the time budget is larger (20 minutes in Figures 5 and 6), each corresponding reachable area is larger too. In the Figures, which illustrate the view which may be displayed to a dispatcher, the dark grey, mid grey and light grey shaded areas correspond to using a fraction of the time budget (0-50%, 50-75% and 75-100% respectively).

Based on the representations shown in Figure 3 and 4 or 5 and 6, which may be displayed to the dispatcher on their display device, the fleet dispatcher can make a more informed decision to assign a new job to a vehicle taking into account remaining driving time of the vehicle. In an example, the dispatcher may assign an emergency vehicle to a reported incident requiring assistance.

The invention may, in embodiments at least, increase overall accuracy of the information used by a fleet dispatcher and reduce manual planning effort to enable the amount of time that a vehicle can be legally operated by the driver(s) associated with the vehicle to be taken into account.

Determination and display of boundaries and reachable area(s) for vehicles may be triggered in response to a command from a dispatcher, or, for example, by the receipt of a new job to be assigned to a vehicle.

The invention may, in embodiments, enable a dispatcher to make better decisions for handling unplanned events without contravening time budgets for vehicles based on remaining driving time. Usage of accurate reachable area information leads more informed ad-hoc planning decisions and impacts the cost of operating a vehicle fleet in a positive way.

A system which may be used to implement embodiments of the invention is exemplified by Figure 7. The vehicle can include: a tachograph; a telematics control unit (TCU); and a navigation device (which is an optional component). The TCU can be arranged to communicate with a server, which in turn is arranged to communicate with the navigation device in the vehicle and a computer of a dispatcher e.g. at a fleet management location. While the system the system shows three distinct devices in the vehicle: the tachograph, the TCU and the navigation device, it will be appreciated that the vehicular components of the system can be shared between a greater number or a fewer number of devices as desired. Similarly, while Figure 7 shows data being transmitted to the server only from the TCU, in other embodiments data can be sent to the server from any of the vehicular devices as desired. The functionality of each of the components shown in Figure 7 will now be described in more detail.

Tachograph: The digital tachograph (or other electronic logging device) records driver activity as log data. The log data is data which may be used to determine a remaining driving time for the vehicle in a predefined period from a current time. The tachograph delivers the log data to the TCU.

TCU: The TCU comprises a position determining device, such as a global navigation satellite system (GNSS) receiver, e.g. GPS or GLONASS. It will be appreciated, however, that other means may be used, such as using the mobile telecommunications network, surface beacons or the like. The positioning determining device generates tracking data, such as time-stamped positions, indicative of the change in position of the device over time. The tracking device further comprises one or more communication devices that are arranged to communicate with the tachograph, the navigation device and the server, either using a wired or wireless connection. The one or more communication devices can comprise a short range wireless transceiver, such as a Bluetooth transceiver, e.g. for communicating with the tachograph and the navigation device, and can comprise a mobile telecommunications transceiver, such as a GPRS or GSM transceiver, e.g. for communicating with the server. One example of a suitable TCU is a TomTom^{®} LINK device as described herein.

Navigation device: The navigation device comprises at least one processor and a display device. The navigation device may be capable of one or more of: calculating a route to be travelled to a desired destination; and providing navigation instructions to guide the driver along a calculated route to reach a desired destination.

Server: The server comprises at least one processor and a communications device for communicating with one of more of the vehicular devices, preferably the TCU, and is arranged to perform the methods described herein to generate data indicative of a boundary and location of interest based on log data and position data received from the TCU and/or tachograph.

Computer: The computer is in communication with the server, and is used by a dispatcher to perform fleet management operations, including the assignment of trips to vehicles as described herein. The boundary and location of interest data is displayed on the computer device to the dispatcher.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of assigning a trip to a vehicle within a fleet of vehicles that traverse a navigable network in a geographic area, each of the vehicles in the fleet being equipped with one or more electronic devices for logging the activities of one or more drivers associated with the vehicle and for determining the location of the vehicle in the geographic area,
the method comprising, generating information for a dispatcher to facilitate the assignment of a trip to a vehicle within the fleet of vehicles by, for each one of one or more vehicles of the fleet of vehicles:
obtaining a location of interest (12) in respect of the vehicle;
obtaining log data for the vehicle indicative of the activities of the one or more drivers associated with the vehicle;
determining a time budget for the vehicle using the obtained log data, the time budget representing the amount of time that the vehicle can be legally operated by the one or more drivers associated with the vehicle within a given time period starting from a time of interest in respect of the vehicle; and
determining an energy budget for the vehicle using obtained energy data for the vehicle;
the method of assigning a trip to a vehicle further comprising receiving, from the dispatcher, data assigning a trip to a vehicle from the one or more vehicles, the data assigning the trip comprising at least a location associated with the trip;
**characterised by** generating information for a dispatcher to facilitate the assignment of a trip to a vehicle within the fleet of vehicles by:
using the obtained location of interest (12) and determined time budget and/or energy budget for the vehicle to determine boundary data indicative of a boundary (10) enclosing a portion of the geographic area representing an area (8) that is reachable by the vehicle by traversing the navigable network from the location of interest (12) within the determined time budget and/or energy budget for the vehicle;
providing data indicative of at least the determined boundary (10) and the location of interest (12) upon which the boundary (10) is based to a display device of the dispatcher for display thereon; and
displaying the determined boundary (10) and the location of interest (12) to the dispatcher on a representation of at least a portion of the navigable network by displaying an electronic map.

2. The method of claim 1, wherein the energy budget is determined based on a current energy level of the vehicle, e.g. charge and/or fuel level of the vehicle.

3. The method of claim 2, wherein the one or more electronic devices of the vehicles in the fleet further comprise one or more electronic devices arranged to provide data indicative of the current energy level e.g. fuel and/or charge level of the vehicle.

4. The method of claim 2 or 3, wherein the current energy level is an actual measured or estimated energy level or a predicted energy level.

5. The method of any preceding claim, further comprising: using historic data on the energy needed for the vehicle to traverse road segments of the navigable network in determining the boundary (10).

6. The method of any preceding claim, wherein the trip is a trip to a new job, the location associated with the trip being the location of the new job; and
optionally further comprising: receiving data indicative of a new job to be assigned to a vehicle from the fleet of vehicles, the data indicative of a new job comprising at least a location of the new job; and
further optionally wherein the data indicative of a new job further comprises a desired start time of the job.

7. The method of claim 6, further comprising: identifying a subset of the fleet of vehicles in relation to which to perform the method of generating information for a dispatcher to facilitate the assignment of a new job or trip to a new job to a vehicle within the fleet of vehicles, wherein the subset of vehicles comprises those vehicles which are available to perform the new job, and/or which are within a certain temporal and/or spatial proximity to the location of the new job.

8. The method of any preceding claim, wherein the trip is a trip to a location of a rest stop, the location associated with the trip being the location of the rest stop; and
optionally wherein the method further comprises: displaying data indicative of possible rest stops to the dispatcher to enable the dispatcher to select a rest stop from the possible rest stops for assignment to the vehicle.

9. The method of any preceding claim, wherein the location of interest (12) is a current location of the vehicle, or
wherein the location of interest (12) is a future location of the vehicle, such as a location of a final job already assigned to the vehicle

10. The method of any preceding claim, wherein the step of determining the boundary data comprises exploring segments of an electronic map representative of navigable elements of the navigable network from a position on a segment representative of the location of interest in respect of the vehicle using a search algorithm having an associated cost function, optionally wherein the cost function takes into account energy consumption.

11. The method of any preceding claim, further comprising obtaining data indicative of a vehicle profile for the vehicle, and using the vehicle profile data in determining the boundary data; and/or
wherein the step of determining the boundary data takes into account live conditions on the navigable network.

12. The method of any preceding claim, further comprising: using the obtained log data indicative of the activities of the one or more drivers associated with the vehicle to determine a remaining driving time for the vehicle at a current time in a predefined period corresponding to the given period to which the time budget relates, and using the determined remaining driving time in determining the time budget.

13. The method of any preceding claim, wherein the boundary data obtained using the obtained location of interest and determined time budget and/or energy budget for the vehicle is indicative of a boundary (10) enclosing a portion of the geographic area representing an area (8) that is reachable by the vehicle by traversing the navigable network from the location of interest within the determined time budget and/or energy budget for the vehicle when using a given amount of the determined time budget, wherein the method further comprises, for the or each vehicle, using the determined time budget and/or energy budget for the vehicle to determine boundary data indicative of one or more further boundary (22) enclosing a portion of the geographic area representing an area (20) that is reachable by the vehicle by traversing the navigable network from the location of interest within the determined time budget and/or energy budget from the vehicle when using a lesser amount of the determined time budget and/or energy budget, and providing data indicative of at least the or each further determined boundary (22) to the display device of the dispatcher for display thereon; and
optionally wherein the method of generating information for the dispatcher to facilitate the assignment of the trip to a vehicle is performed in respect of a plurality of vehicles, where the reachable areas defined by boundaries determined for different vehicles in respect of corresponding amounts of a respective time budget and/or energy budget for the vehicles overlap, the method comprises determining data indicative of a single boundary enclosing a portion of the geographic area representing a single, combined reachable area corresponding to the combination of the reachable areas enclosed by the respective boundaries for the different vehicles in respect of the given amount of a time budget and/or energy budget, and providing data indicative of the single boundary to the display device of the dispatcher for display thereon.

14. A system for assigning a trip to a vehicle within a fleet of vehicles that traverse a navigable network in a geographic area, each of the vehicles in the fleet being equipped with one or more electronic devices for logging the activities of one or more drivers associated with the vehicle and for determining the location of the vehicle in the geographic area,
the system comprising, a sub-system configured to generate information for a dispatcher to facilitate the assignment of a trip to a vehicle within the fleet of vehicles by, for each one of one or more vehicles of the fleet of vehicles:
obtaining a location of interest (12) in respect of the vehicle;
obtaining log data for the vehicle indicative of the activities of the one or more drivers associated with the vehicle;
determining a time budget for the vehicle using the obtained log data, the time budget representing the amount of time that the vehicle can be legally operated by the one or more drivers associated with the vehicle within a given time period starting from a time of interest in respect of the vehicle;
determining an energy budget for the vehicle using obtained energy data for the vehicle;
the system for assigning a trip to a vehicle further adapted to receive from the dispatcher, data assigning a trip to as vehicle from the one or more vehicles, the data assigning the trip comprising at least a location associated with the trip; **characterised by** generating information for a dispatcher to facilitate the assignment of a trip to a vehicle within the fleet of vehicles by:
using the obtained location of interest (12) and determined time budget and/or energy budget for the vehicle to determine boundary data indicative of a boundary (10) enclosing a portion of the geographic area representing an area (8) that is reachable by the vehicle by traversing the navigable network from the location of interest (12) within the determined time budget and/or energy budget for the vehicle;
providing data indicative of at least the determined boundary (10) and the location of interest upon which the boundary (10) is based to a display device of the dispatcher for display thereon; and
displaying the determined boundary (10) and the location of interest (12) to the dispatcher on a representation of at least a portion of the navigable network by displaying an electronic map;
the system for assigning a trip to a vehicle further comprising means for displaying the determined boundary (10) and the location of interest to the dispatcher on a representation of at least a portion of the navigable network by displaying an electronic map and means for receiving, from the dispatcher, data assigning a trip to a vehicle from the one or more vehicles, the data assigning the trip comprising at least a location associated with the trip.

15. A computer program product comprising instructions which, when read by a machine, cause the machine to operate according to the method of any one of claims 1 to 13.

## Patentansprüche

1. Verfahren zur Zuordnung einer Reise an ein Fahrzeug in einem Fuhrpark von Fahrzeugen, die ein navigierbares Netz in einem geografischen Bereich durchqueren, wobei jedes der Fahrzeuge in dem Fuhrpark mit einer oder mehreren elektronischen Vorrichtungen ausgestattet ist, um die Aktivitäten eines oder mehrerer Fahrer, die dem Fahrzeug zugeordnet sind, zu protokollieren und die Position des Fahrzeugs in dem geografischen Bereich zu bestimmen,
wobei das Verfahren ein Erzeugen von Informationen für einen Abfertiger umfasst, um die Zuordnung einer Reise an ein Fahrzeug in dem Fuhrpark von Fahrzeugen, für jedes von einem oder mehreren Fahrzeugen des Fuhrparks von Fahrzeugen, zu erleichtern, durch:
Erhalten einer interessierenden Position (12) in Bezug auf das Fahrzeug;
Erhalten von Protokolldaten für das Fahrzeug, die die Aktivitäten des einen oder der mehreren Fahrer angeben, die dem Fahrzeug zugeordnet sind;
Bestimmen eines Zeitbudgets für das Fahrzeug unter Verwendung der erhaltenen Protokolldaten, wobei das Zeitbudget die Menge an Zeit darstellt, für die das Fahrzeug durch den einen oder die mehreren Fahrer, die dem Fahrzeug zugeordnet sind, in einem vorgegebenen Zeitraum, der an einem interessierenden Zeitpunkt in Bezug auf das Fahrzeug beginnt, legal betrieben werden kann; und
Bestimmen eines Energiebudgets für das Fahrzeug unter Verwendung erhaltener Energiedaten für das Fahrzeug;
wobei das Verfahren zur Zuordnung einer Fahrtstrecke an ein Fahrzeug weiter ein Empfangen von Daten von dem Abfertiger umfasst, die eine Fahrtstrecke an ein Fahrzeug von dem einen oder den mehreren Fahrzeugen zuweisen, wobei die Daten, die die Fahrtstrecke zuweisen, zumindest eine Position umfassen, die der Fahrtstrecke zugeordnet ist;
**gekennzeichnet durch** ein Erzeugen von Informationen für einen Abfertiger, um die Zuordnung einer Reise an ein Fahrzeug in dem Fuhrpark von Fahrzeugen zu erleichtern, **durch**:
Verwenden der erhaltenen interessierenden Position (12) und des bestimmten Zeitbudgets und/oder Energiebudgets für das Fahrzeug zum Bestimmen von Begrenzungsdaten, die eine Begrenzung (10) angeben, die einen Abschnitt des geografischen Bereichs umschließt, der einen Bereich (8) darstellt, der **durch** das Fahrzeug mittels Durchqueren des navigierbaren Netzes von der interessierenden Position (12) innerhalb des bestimmten Zeitbudgets und/oder Energiebudgets für das Fahrzeug erreichbar ist;
Bereitstellen von Daten, die zumindest die bestimmte Begrenzung (10) und die interessierende Position (12) angeben, auf der die Begrenzung (10) basiert, an eine Anzeigevorrichtung des Abfertigers zur Anzeige darauf; und
Anzeigen der bestimmten Begrenzung (10) und der interessierenden Position (12) für den Abfertiger auf einer Darstellung von zumindest einem Abschnitt des navigierbaren Netzes **durch** Anzeigen einer elektronischen Straßenkarte.

2. Verfahren nach Anspruch 1, wobei das Energiebudget auf der Grundlage eines aktuellen Energieniveaus des Fahrzeugs bestimmt wird, z. B. Lade- und/oder Kraftstoffstand des Fahrzeugs.

3. Verfahren nach Anspruch 2, wobei die eine oder mehreren elektronischen Vorrichtungen der Fahrzeuge in dem Fuhrpark weiter eine oder mehrere elektronische Vorrichtungen umfassen, die zum Bereitstellen von Daten angeordnet sind, die das aktuelle Energieniveau angeben, z. B. Kraftstoff- und/oder Ladestand des Fahrzeugs.

4. Verfahren nach Anspruch 2 oder 3, wobei das aktuelle Energieniveau ein tatsächliches gemessenes oder geschätztes Energieniveau oder ein vorhergesagtes Energieniveau ist.

5. Verfahren nach einem vorstehenden Anspruch, weiter umfassend: Verwenden von Verlaufsdaten zu der Energie, die für das Fahrzeug zum Durchqueren von Straßensegmenten des navigierbaren Netzes benötigt wird, beim Bestimmen der Begrenzung (10).

6. Verfahren nach einem vorstehenden Anspruch, wobei die Reise eine Reise zu einem neuen Arbeitsauftrag ist, wobei die Position, die der Reise zugeordnet ist, die Position des neuen Arbeitsauftrags ist; und
optional weiter umfassend: Empfangen von Daten, die einen neuen Arbeitsauftrag angeben, der an ein Fahrzeug aus dem Fuhrpark von Fahrzeugen zugeordnet werden soll, wobei die Daten, die einen neuen Arbeitsauftrag angeben, zumindest eine Position des neuen Arbeitsauftrags umfassen; und
wobei weiter optional die Daten, die einen neuen Arbeitsauftrag angeben, weiter eine gewünschte Beginnzeit des Arbeitsauftrags umfassen.

7. Verfahren nach Anspruch 6, weiter umfassend: Identifizieren einer Teilgruppe des Fuhrparks von Fahrzeugen, in Bezug auf welche das Verfahren des Erzeugens von Informationen für einen Abfertiger durchgeführt werden soll, um die Zuordnung eines neuen Arbeitsauftrags oder einer Reise zu einem neuen Arbeitsauftrag an ein Fahrzeug in dem Fuhrpark von Fahrzeugen zu erleichtern, wobei die Teilgruppe von Fahrzeugen jene Fahrzeuge umfasst, die zum Durchführen des neuen Arbeitsauftrags verfügbar sind und/oder sich in einer gewissen zeitlichen und/oder räumlichen Nähe zu der Position des neuen Arbeitsauftrags befinden.

8. Verfahren nach einem vorstehenden Anspruch, wobei die Reise eine Reise zu einer Position einer Raststätte ist, wobei die Position, die der Reise zugeordnet ist, die Position der Raststätte ist; und
wobei optional das Verfahren weiter umfasst: Anzeigen von Daten, die mögliche Raststätten angeben, für den Abfertiger, um es dem Abfertiger zu ermöglichen, eine Raststätte aus den möglichen Raststätten zur Zuordnung an das Fahrzeug auszuwählen.

9. Verfahren nach einem vorstehenden Anspruch, wobei die interessierende Position (12) eine aktuelle Position des Fahrzeugs ist, oder
wobei die interessierende Position (12) eine zukünftige Position des Fahrzeugs ist, beispielsweise eine Position eines endgültigen Arbeitsauftrags, der bereits an das Fahrzeug zugeordnet ist.

10. Verfahren nach einem vorstehenden Anspruch, wobei der Schritt des Bestimmens der Begrenzungsdaten ein Erforschen von Segmenten einer elektronischen Straßenkarte umfasst, die navigierbare Elemente des navigierbaren Netzes darstellen, von einer Position auf einem Segment, das die interessierende Position in Bezug auf das Fahrzeug darstellt, unter Verwendung eines Suchalgorithmus mit einer zugeordneten Kostenfunktion, wobei optional die Kostenfunktion den Energieverbrauch berücksichtigt.

11. Verfahren nach einem vorstehenden Anspruch, weiter umfassend ein Erhalten von Daten, die ein Fahrzeugprofil für das Fahrzeug angeben, und Verwenden der Fahrzeugprofildaten beim Bestimmen der Begrenzungsdaten; und/oder
wobei der Schritt des Bestimmens der Begrenzungsdaten Echtzeitbedingungen in dem navigierbaren Netz berücksichtigt.

12. Verfahren nach einem vorstehenden Anspruch, weiter umfassend: Verwenden der erhaltenen Protokolldaten, die die Aktivitäten des einen oder der mehreren Fahrer angeben, die dem Fahrzeug zugeordnet sind, um eine verbleibende Fahrzeit für das Fahrzeug an einem aktuellen Zeitpunkt in einem vordefinierten Zeitraum zu bestimmen, der dem vorgegebenen Zeitraum in Bezug auf das Zeitbudget entspricht, und Verwenden der bestimmten verbleibenden Fahrzeit beim Bestimmen des Zeitbudgets.

13. Verfahren nach einem vorstehenden Anspruch, wobei die Begrenzungsdaten, die unter Verwendung der erhaltenen interessierenden Position und des bestimmten Zeitbudgets und/oder Energiebudgets für das Fahrzeug erhalten werden, eine Begrenzung (10) angeben, die einen Abschnitt des geografischen Bereichs umschließt, der einen Bereich (8) darstellt, der durch das Fahrzeug mittels Durchqueren des navigierbaren Netzes von der interessierenden Position innerhalb des bestimmten Zeitbudgets und/oder Energiebudgets für das Fahrzeug erreichbar ist, wenn eine vorgegebene Menge des bestimmten Zeitbudgets verwendet wird, wobei das Verfahren weiter für das oder jedes Fahrzeug Folgendes umfasst: Verwenden des bestimmten Zeitbudgets und/oder Energiebudgets für das Fahrzeug zum Bestimmen von Begrenzungsdaten, die eine oder mehrere weitere Begrenzungen (22) angeben, die einen Abschnitt des geografischen Bereichs umschließen, der einen Bereich (20) darstellt, der durch das Fahrzeug mittels Durchqueren des navigierbaren Netzes von der interessierenden Position innerhalb des bestimmten Zeitbudgets und/oder Energiebudgets von dem Fahrzeug erreichbar ist, wenn eine geringere Menge des bestimmten Zeitbudgets und/oder Energiebudgets verwendet wird, und Bereitstellen von Daten, die zumindest die oder jede weitere bestimmte Begrenzung (22) angeben, an die Anzeigevorrichtung des Abfertigers zur Anzeige darauf; und wobei optional das Verfahren des Erzeugens von Informationen für den Abfertiger, um die Zuordnung der Reise an ein Fahrzeug zu erleichtern, in Bezug auf eine Mehrzahl von Fahrzeugen durchgeführt wird, wobei die erreichbaren Bereiche, die durch Begrenzungen definiert sind, welche für unterschiedliche Fahrzeuge in Bezug auf entsprechende Mengen eines jeweiligen Zeitbudgets und/oder Energiebudgets für die Fahrzeuge bestimmt werden, einander überlappen, wobei das Verfahren ein Bestimmen von Daten umfasst, die eine einzelne Begrenzung angeben, die einen Abschnitt des geografischen Bereichs umschließt, der einen einzelnen, kombinierten erreichbaren Bereich darstellt, der der Kombination der erreichbaren Bereiche entspricht, die durch die jeweiligen Begrenzungen für die unterschiedlichen Fahrzeuge umschlossen sind, in Bezug auf die vorgegebene Menge eines Zeitbudgets und/oder Energiebudgets, und Bereitstellen von Daten, die die einzelne Begrenzung angeben, an die Anzeigevorrichtung des Abfertigers zur Anzeige darauf.

14. System zum Zuordnen einer Reise an ein Fahrzeug in einem Fuhrpark von Fahrzeugen, die ein navigierbares Netz in einem geografischen Bereich durchqueren, wobei jedes der Fahrzeuge in dem Fuhrpark mit einer oder mehreren elektronischen Vorrichtungen ausgestattet ist, um die Aktivitäten eines oder mehrerer Fahrer, die dem Fahrzeug zugeordnet sind, zu protokollieren und die Position des Fahrzeugs in dem geografischen Bereich zu bestimmen,
wobei das System ein Untersystem umfasst, konfiguriert zum Erzeugen von Informationen für einen Abfertiger, um die Zuordnung einer Reise an ein Fahrzeug in dem Fuhrpark von Fahrzeugen, für jedes von einem oder mehreren Fahrzeugen des Fuhrparks von Fahrzeugen, zu erleichtern, durch:
Erhalten einer interessierenden Position (12) in Bezug auf das Fahrzeug;
Erhalten von Protokolldaten für das Fahrzeug, die die Aktivitäten des einen oder der mehreren Fahrer angeben, die dem Fahrzeug zugeordnet sind;
Bestimmen eines Zeitbudgets für das Fahrzeug unter Verwendung der erhaltenen Protokolldaten, wobei das Zeitbudget die Menge an Zeit darstellt, für die das Fahrzeug durch den einen oder die mehreren Fahrer, die dem Fahrzeug zugeordnet sind, in einem vorgegebenen Zeitraum, der an einem interessierenden Zeitpunkt in Bezug auf das Fahrzeug beginnt, legal betrieben werden kann;
Bestimmen eines Energiebudgets für das Fahrzeug unter Verwendung erhaltener Energiedaten für das Fahrzeug;
wobei das System zum Zuordnen einer Reise an ein Fahrzeug weiter zum Empfangen von Daten von dem Abfertiger, die eine Reise an ein Fahrzeug von dem einen oder den mehreren Fahrzeugen zuordnen, wobei die Daten, die die Reise zuordnen, zumindest eine Position umfassen, die der Reise zugeordnet ist, ausgelegt ist; **gekennzeichnet durch** ein Erzeugen von Informationen für einen Abfertiger, um die Zuordnung einer Reise an ein Fahrzeug in dem Fuhrpark von Fahrzeugen zu erleichtern, **durch**:
Verwenden der erhaltenen interessierenden Position (12) und des bestimmten Zeitbudgets und/oder Energiebudgets für das Fahrzeug zum Bestimmen von Begrenzungsdaten, die eine Begrenzung (10) angeben, die einen Abschnitt des geografischen Bereichs umschließt, der einen Bereich (8) darstellt, der **durch** das Fahrzeug mittels Durchqueren des navigierbaren Netzes von der interessierenden Position (12) innerhalb des bestimmten Zeitbudgets und/oder Energiebudgets für das Fahrzeug erreichbar ist;
Bereitstellen von Daten, die zumindest die bestimmte Begrenzung (10) und die interessierende Position angeben, auf der die Begrenzung (10) basiert, an eine Anzeigevorrichtung des Abfertigers zur Anzeige darauf; und
Anzeigen der bestimmten Begrenzung (10) und der interessierenden Position (12) für den Abfertiger auf einer Darstellung von zumindest einem Abschnitt des navigierbaren Netzes **durch** Anzeigen einer elektronischen Straßenkarte;
wobei das System zum Zuordnen einer Reise an ein Fahrzeug weiter Mittel umfasst zum Anzeigen der bestimmten Begrenzung (10) und der interessierenden Position für den Abfertiger auf einer Darstellung von zumindest einem Abschnitt des navigierbaren Netzes **durch** Anzeigen einer elektronischen Straßenkarte, und Mittel zum Empfangen von Daten von dem Abfertiger, die eine Reise an ein Fahrzeug von dem einen oder den mehreren Fahrzeugen zuordnen, wobei die Daten, die die Reise zuordnen, zumindest eine Position umfassen, die der Reise zugeordnet ist.

15. Computerprogrammprodukt, das Anweisungen umfasst, die, wenn sie von einer Maschine gelesen werden, die Maschine veranlassen, gemäß dem Verfahren nach einem der Ansprüche 1 bis 13 zu arbeiten.

## Revendications

1. Procédé d'attribution d'un voyage à un véhicule d'une flotte de véhicules qui traversent un réseau navigable dans une zone géographique, chacun des véhicules de la flotte étant équipé d'un ou plusieurs dispositifs électroniques pour enregistrer les activités d'un ou plusieurs conducteurs associés au véhicule et pour déterminer l'emplacement du véhicule dans la zone géographique,
le procédé comprenant la génération d'informations pour faciliter l'attribution, par un coordinateur, d'un voyage à un véhicule de la flotte de véhicules en, pour chacun des un ou plusieurs véhicules de la flotte de véhicules :
obtenant un emplacement d'intérêt (12) par rapport au véhicule ;
obtenant des données d'enregistrement pour le véhicule indicatives des activités des un ou plusieurs conducteurs associés au véhicule ;
déterminant un budget temps pour le véhicule en utilisant les données d'enregistrement obtenues, le budget temps représentant la quantité de temps pendant laquelle le véhicule peut légalement être utilisé par les un ou plusieurs conducteurs associés au véhicule dans une période de temps donnée à compter d'un moment d'intérêt par rapport au véhicule ; et
déterminant un budget énergie pour le véhicule en utilisant les données d'énergie obtenues pour le véhicule ;
le procédé d'attribution d'un voyage à un véhicule comprenant en outre la réception, en provenance du coordinateur, de données attribuant un voyage à un véhicule parmi les un ou plusieurs véhicules, les données attribuant le voyage comprenant au moins un emplacement associé au voyage ;
**caractérisé par** la génération d'informations pour faciliter l'attribution, par un coordinateur, d'un voyage à un véhicule de la flotte de véhicules en :
utilisant l'emplacement d'intérêt (12) obtenu et le budget temps et/ou le budget énergie déterminés pour le véhicule pour déterminer des données de limite indicatives d'une limite (10) entourant une partie de la zone géographique représentant une zone (8) qui peut être atteinte par le véhicule en traversant le réseau navigable depuis l'emplacement d'intérêt (12) dans le budget temps et/ou le budget énergie déterminés pour le véhicule ;
fournissant des données indicatives d'au moins la limite (10) déterminée et l'emplacement d'intérêt (12) sur lequel est basée la limite (10) à un dispositif d'affichage du coordinateur pour affichage sur celui-ci ; et
affichant la limite (10) déterminée et l'emplacement d'intérêt (12) au coordinateur sur une représentation d'au moins une partie du réseau navigable en affichant une carte électronique.

2. Procédé selon la revendication 1, dans lequel le budget énergie est déterminé sur la base d'un niveau d'énergie actuel du véhicule, par exemple, niveau de charge et/ou de carburant du véhicule.

3. Procédé selon la revendication 2, dans lequel les un ou plusieurs dispositifs électroniques des véhicules de la flotte comprennent en outre un ou plusieurs dispositifs électroniques conçus pour fournir des données indicatives du niveau d'énergie actuel, par exemple, niveau de carburant et/ou de charge du véhicule.

4. Procédé selon la revendication 2 ou revendication 3, dans lequel le niveau d'énergie actuel est un niveau d'énergie estimé ou mesuré actuel ou un niveau d'énergie prédit.

5. Procédé selon une quelconque revendication précédente, comprenant en outre : l'utilisation de données historiques sur l'énergie nécessaire au véhicule pour traverser des segments de route du réseau navigable lors de la détermination de la limite (10).

6. Procédé selon une quelconque revendication précédente, dans lequel le voyage est un voyage jusqu'à un nouveau travail, l'emplacement associé au voyage étant l'emplacement du nouveau travail ; et
comprenant en outre facultativement : la réception de données indicatives d'un nouveau travail à attribuer à un véhicule de la flotte de véhicules, les données indicatives d'un nouveau travail comprenant au moins un emplacement du nouveau travail ; et
facultativement en outre dans lequel les données indicatives d'un nouveau travail comprennent en outre un moment de début souhaité du travail.

7. Procédé selon la revendication 6, comprenant en outre : l'identification d'un sous-ensemble de la flotte de véhicules par rapport auquel il faut mettre en œuvre le procédé de génération d'informations pour faciliter l'attribution, par un coordinateur, d'un nouveau travail ou voyage jusqu'à un nouveau travail à un véhicule de la flotte de véhicules, dans lequel le sous-ensemble de véhicules comprend les véhicules qui sont disponibles pour mettre en œuvre le nouveau travail, et/ou qui sont dans une certaine proximité temporelle et/ou spatiale de l'emplacement du nouveau travail.

8. Procédé selon une quelconque revendication précédente, dans lequel le voyage est un voyage jusqu'à un emplacement d'une aire de repos, l'emplacement associé au voyage étant l'emplacement de l'aire de repos ; et
facultativement dans lequel le procédé comprend en outre : l'affichage de données indicatives d'aires de repos possibles à l'attention du coordinateur pour permettre au coordinateur de sélectionner une aire de repos parmi les aires de repos possibles pour attribution au véhicule.

9. Procédé selon une quelconque revendication précédente, dans lequel l'emplacement d'intérêt (12) est un emplacement actuel du véhicule, ou
dans lequel l'emplacement d'intérêt (12) est un emplacement futur du véhicule, tel qu'un emplacement d'un travail final déjà attribué au véhicule

10. Procédé selon une quelconque revendication précédente, dans lequel l'étape de détermination des données de limite comprend l'exploration de segments d'une carte électronique représentative d'éléments navigables du réseau navigable à partir d'une position sur un segment représentatif de l'emplacement d'intérêt par rapport au véhicule en utilisant un algorithme de recherche présentant une fonction de coût associée, facultativement dans lequel la fonction de coût prend en compte la consommation d'énergie.

11. Procédé selon une quelconque revendication précédente, comprenant en outre l'obtention de données indicatives d'un profil de véhicule pour le véhicule, et l'utilisation des données de profil de véhicule lors de la détermination des données de limite ; et/ou
dans lequel l'étape de détermination des données de limite prend en compte les conditions en direct sur le réseau navigable.

12. Procédé selon une quelconque revendication précédente, comprenant en outre : l'utilisation des données d'enregistrement obtenues indicatives des activités des un ou plusieurs conducteurs associés au véhicule pour déterminer un temps de conduite restant pour le véhicule à un moment actuel dans une période prédéfinie correspondant à la période donnée à laquelle se réfère le budget temps, et l'utilisation du temps de conduite restant déterminé pour déterminer le budget temps.

13. Procédé selon une quelconque revendication précédente, dans lequel les données de limite obtenues en utilisant l'emplacement d'intérêt obtenu et le budget temps et/ou le budget énergie déterminés pour le véhicule sont indicatives d'une limite (10) entourant une partie de la zone géographique représentant une zone (8) qui peut être atteinte par le véhicule en traversant le réseau navigable depuis l'emplacement d'intérêt dans le budget temps et/ou le budget énergie déterminés pour le véhicule lors de l'utilisation d'une quantité donnée du budget temps déterminé, dans lequel le procédé comprend en outre, pour le ou chaque véhicule, l'utilisation du budget temps et/ou du budget énergie déterminés pour le véhicule pour déterminer des données de limite indicatives d'une ou plusieurs autres limites (22) entourant une partie de la zone géographique représentant une zone (20) qui peut être atteinte par le véhicule en traversant le réseau navigable depuis l'emplacement d'intérêt dans le budget temps et/ou le budget énergie déterminés depuis le véhicule lors de l'utilisation d'une quantité moindre du budget temps et/ou du budget énergie déterminés, et la fourniture de données indicatives d'au moins la ou chaque autre limite (22) déterminée au dispositif d'affichage du coordinateur pour affichage sur celui-ci ; et
facultativement dans lequel le procédé de génération d'informations pour faciliter l'attribution, par le coordinateur, du voyage à un véhicule est mis en œuvre par rapport à une pluralité de véhicules, où les zones atteignables définies par des limites déterminées pour différents véhicules par rapport à des quantités correspondantes d'un budget temps et/ou d'un budget énergie respectifs pour les véhicules se chevauchent, le procédé comprend la détermination de données indicatives d'une unique limite entourant une partie de la zone géographique représentant une unique zone atteignable combinée correspondant à la combinaison des zones atteignables entourées par les limites respectives pour les différents véhicules par rapport à la quantité donnée d'un budget temps et/ou d'un budget énergie, et la fourniture de données indicatives de la limite unique au dispositif d'affichage du coordinateur pour affichage sur celui-ci.

14. Système d'attribution d'un voyage à un véhicule d'une flotte de véhicules qui traversent un réseau navigable dans une zone géographique, chacun des véhicules de la flotte étant équipé d'un ou plusieurs dispositifs électroniques pour enregistrer les activités d'un ou plusieurs conducteurs associés au véhicule et pour déterminer l'emplacement du véhicule dans la zone géographique,
le système comprenant un sous-système configuré pour générer des informations pour faciliter l'attribution, par un coordinateur, d'un voyage à un véhicule de la flotte de véhicules en, pour chacun des un ou plusieurs véhicules de la flotte de véhicules :
obtenant un emplacement d'intérêt (12) par rapport au véhicule ;
obtenant des données d'enregistrement pour le véhicule indicatives des activités des un ou plusieurs conducteurs associés au véhicule ;
déterminant un budget temps pour le véhicule en utilisant les données d'enregistrement obtenues, le budget temps représentant la quantité de temps pendant laquelle le véhicule peut légalement être utilisé par les un ou plusieurs conducteurs associés au véhicule dans une période de temps donnée à compter d'un moment d'intérêt par rapport au véhicule ;
déterminant un budget énergie pour le véhicule en utilisant les données d'énergie obtenues pour le véhicule ;
le système d'attribution d'un voyage à un véhicule étant en outre adapté pour recevoir, en provenance du coordinateur, des données attribuant un voyage à un véhicule parmi les un ou plusieurs véhicules, les données attribuant le voyage comprenant au moins un emplacement associé au voyage ; **caractérisé par** la génération d'informations pour faciliter l'attribution, par un coordinateur, d'un voyage à un véhicule de la flotte de véhicules en :
utilisant l'emplacement d'intérêt (12) obtenu et le budget temps et/ou le budget énergie déterminés pour le véhicule pour déterminer des données de limite indicatives d'une limite (10) entourant une partie de la zone géographique représentant une zone (8) qui peut être atteinte par le véhicule en traversant le réseau navigable depuis l'emplacement d'intérêt (12) dans le budget temps et/ou le budget énergie déterminés pour le véhicule ;
fournissant des données indicatives d'au moins la limite (10) déterminée et l'emplacement d'intérêt sur lequel est basée la limite (10) à un dispositif d'affichage du coordinateur pour affichage sur celui-ci ; et
affichant la limite (10) déterminée et l'emplacement d'intérêt (12) au coordinateur sur une représentation d'au moins une partie du réseau navigable en affichant une carte électronique ;
le système d'attribution d'un voyage à un véhicule comprenant en outre un moyen pour afficher la limite (10) déterminée et l'emplacement d'intérêt au coordinateur sur une représentation d'au moins une partie du réseau navigable en affichant une carte électronique et un moyen pour recevoir, en provenance du coordinateur, des données attribuant un voyage à un véhicule parmi les un ou plusieurs véhicules, les données attribuant le voyage comprenant au moins un emplacement associé au voyage.

15. Produit de programme informatique comprenant des instructions qui, lorsqu'elles sont lues par une machine, amènent la machine à fonctionner selon le procédé selon l'une quelconque des revendications 1 à 13.
